(19) Europäisches Patentamt
European Patent Office
Office européen des brevets

(11) **EP 1 688 873 A1**

(12) **EUROPEAN PATENT APPLICATION**
published in accordance with Art. 158(3) EPC

(43) Date of publication:
**09.08.2006 Bulletin 2006/32**

(51) Int Cl.:
***G06Q 10/00*** (2006.01)

(21) Application number: **04720221.3**

(22) Date of filing: **12.03.2004**

(86) International application number:
**PCT/JP2004/003354**

(87) International publication number:
**WO 2005/050510 (02.06.2005 Gazette 2005/22)**

(84) Designated Contracting States:
**AT BE BG CH CY CZ DE DK EE ES FI FR GB GR HU IE IT LI LU MC NL PL PT RO SE SI SK TR**

(30) Priority: **23.10.2003 JP 2003396346**

(71) Applicants:
• **Intellectual Property Bank Corp.**
**Tokyo 105-0001 (JP)**
• **Masuyama, Hiroaki**
**Toyonaka-shi,**
**Osaka 560-0054 (JP)**

(72) Inventors:
• **MASUYAMA, Hiroaki**
**Toyonaka-shi, Osaka 5600054 (JP)**
• **MIYAMOTO, Kaoru,**
**Villa White Nagasaki 102**
**Tokyo 171-0051 (JP)**

(74) Representative: **Style, Kelda Camilla Karen et al**
**Page White & Farrer**
**54 Doughty Street**
**GB-London WC1N 2LS (GB)**

(54) **ENTERPRISE EVALUATION DEVICE AND ENTERPRISE EVALUATION PROGRAM**

(57) There are provided an enterprise evaluation device and an enterprise evaluation program capable of calculating and outputting an index for judging the attitude of a particular enterprise for research and development according to the investment size for the research and development activities. The enterprise evaluation device includes: financial affair information acquisition means for acquiring the investment size for research and development and a manufacturing/sales profit of a particular enterprise from financial affair database containing information on financial affairs of enterprises; research and development investment size ratio calculation means for dividing the acquired research and development investment by the manufacturing/sales profit so as to calculate the research and development investment ratio; and output means for outputting the calculated research and development investment ratio on display means or the like. Thus, it is possible to calculate and display the research and development investment ratio and know how much ratio of the profit obtained by manufacturing/sales is distributed to the research and development activity in a particular enterprise.

FIG. 10

EP 1 688 873 A1

**Description**

TECHNICAL FIELD

The present invention relates to an enterprise evaluation device and enterprise evaluation program for evaluating the value of each enterprise based on finance information of enterprises.

BACKGROUND ART

Conventionally, Japanese Patent Laid-Open Publication No. 2000-348015 (Patent Document 1) describes a system, method and recording medium for evaluating an evaluation item based on first data having a predetermined renewal interval and second data having a renewal interval that is shorter than that of the first data. This evaluation system has (a) means for creating a first evaluation model according to input of the first data of sample targets, (b) means for applying the first data of the sample targets to the first evaluation model and calculating first evaluation output, (c) means for creating a second evaluation model according to input of the second data and the first evaluation output of the sample targets, (d) means for applying the first data to the first evaluation model according to the input of the first data of an evaluation target and calculating second evaluation output, and (e) means for applying the second data and the second evaluation output of the evaluation target to the second evaluation model and calculating the evaluation output of the evaluation target, and thereby evaluates the evaluation item of the evaluation target that could change with time.

With the foregoing evaluation system, to predict changes in the enterprise evaluation derived from financial data in which the renewal period is relatively long such as every year or every quarter, data in which the renewal period is relatively short such as stock price, interest and currency exchange that fluctuate from day to day is used to reflect changes in the economy. In this system, enterprise evaluation is made in a timely manner at the point in time such evaluation is to be made.

Further, Japanese Patent Laid-Open Publication No. 2001-76042 (Patent Document 2) describes an intellectual property evaluation device and intellectual property evaluation method for evaluating the proprietary nature of intellectual property relating to a pending or registered invention or the like. This evaluation device has an actual profit input means for inputting data regarding the actual profit, a present value rate input means for inputting data regarding the present value rate per year, a compound present value calculation means for calculating the compound present values of annual compensation by multiplying the data regarding the actual profit with the data regarding the present value rates per year, an intellectual property price calculation means for calculating an intellectual property price by totaling the calculated compound present value of the annual compensation amounts, and an output means for outputting the intellectual property value amount calculated with the intellectual property price calculation means.

The foregoing intellectual property evaluation device is for comprehending the asset value of currently existing patents by depreciating registered patents and the related sales volume and profits. Moreover, with respect to the evaluation of the value of each patent, the input ranking of evaluation conducted by one's own company and evaluation conducted by other companies is evaluated as the contribution.

Further, Japanese Patent Publication No. 2002-502529 of Translation of PCT Application (Patent Document 3) describes a method for processing data, including the steps of maintaining at least one first patent database, maintaining at least one second non-patent information database of interest to a corporate entity, and maintaining one or more groups, wherein each of the one or more groups has an arbitrary number of patents from the at least one first database, and further including a step of automatically processing non-patent information from the at least one second database and one patent of the foregoing one or more groups.

For financial institutions, investors and corporations, it is extremely important to assess the enterprise value of investment destinations and customers. Thus, conventionally, in order to assess such enterprise value, attempts have been made for objectively judging the enterprise value based on management-finance information regarding management, finance or stock prices. Among such attempts, there are methods of screening and ranking the company to be evaluated via multivariate analysis, statistical techniques and data mining methods.

Recently, with the increasing ratio of intangible assets making up the enterprise value, the value of intangible assets now has a great influence on the enterprise value. Nevertheless, generally speaking, an enterprise value is not a book value in a balance sheet represented by total assets = liabilities + stockholders' equity, and is roughly calculated by the total market value + liabilities. Therefore, when complete current value accounting is applied, the amount calculated by the total market value - stockholders' equity will represent the validity of invisible assets (intangible assets) of the enterprise. Nevertheless, there is a drawback in that it is difficult to specifically calculate the value of intangible assets and judge the value according to application.

DISCLOSURE OF THE INVENTION

With the system described in Patent Document 1, a model for enterprise evaluation is created by inputting data (dynamic data) with a short renewal period such as stock prices in addition to data (static data) with a long renewal period such as financial data to be publicly announced at the end of the fiscal term. The static data and dynamic data related to the evaluation target are applied to this model. Thereby, the evaluation of the item to be evaluated, which could change over time, is calculated in a timely manner and as the latest information. Nevertheless, there is a drawback in that it is not possible to judge the attitude of enterprises to research and development and its trend.

Moreover, the intellectual property evaluation device described in Patent Document 2 is to evaluate the intellectual property such as patents one by one each year, and there is a drawback in that it is not possible to judge the value of a specified enterprise.

With the method for processing data described in Patent Document 3, there is a database containing patent information data and non-patent information data (finance information, R&D information, configuration table of manufactured products, R&D expenses of manufactured products, royalty income from patents of manufactured products, information of competitors and so on of the enterprise), a network is connected with the user, the user inputs information that he/she wants and such information is subject to computer processing and provided to the user, whereby the user is able to make an evaluation. Further, in addition to searching patents relating to products manufactured by the enterprise, R&D expenses relating to such patents and the royalty income thereof are calculated and processed. Nevertheless, there is no materiality in the subject matter of the calculation processing other than (R&D)/(number of patents), and there is a problem in that it is also difficult to implement regarding the other indexes. Moreover, there is a drawback in that it is not possible to evaluate enterprises by tabulating all patents owned by an enterprise, not specific patents, and then combining this information and finance information.

The total market value is determined by the stock prices in the market. Thus, whether the current stock price and the value of intangible assets calculated based on the stockholders' equity in the book are valid is an extremely important element for investors in the decision-making of stock trading. Enterprises are hoping to increase their value of intangible assets and thereby increase their enterprise value by procuring funds and continuing technical developments. Therefore, increasing the value of intangible assets will be positioned as an important issue in the management strategy for enterprises.

There have been attempts of trying to evaluate intangible assets from the past. Nevertheless, there is a drawback in that it is not possible to evaluate the enterprise value validity by quantitatively and qualitatively incorporating the value of intangible assets. Further, when making an investment in a specified enterprise or jointly developing a product with a specified enterprise, or desiring to be employed in a specified enterprise, there is a drawback in that it is difficult to know the trend of such enterprise in each technical field or to predict the potential of such enterprise.

In light of the foregoing conventional circumstances, an object of the present invention is to provide an enterprise evaluation device and enterprise evaluation program capable of conducting enterprise value evaluation by acquiring finance information of enterprises such as the R&D cost or total market value of a specified enterprise, and analyzing the research and development strategy or intellectual property strategy of enterprises.

Further, another object of the present invention is to provide an enterprise evaluation device and enterprise evaluation program capable of calculating and outputting indexes for judging the attitude of a specified enterprise to research and development based on the size of investments made in the research and development activities.

In order to achieve the foregoing objects, the present invention provides an enterprise evaluation device, including:

management-finance information acquisition means for acquiring R&D cost in a first specified period and the gross operating profit in a second specified period of a specified enterprise from a management-finance database containing management-finance information of enterprises;

R&D cost ratio calculation means for calculating the R&D cost ratio by dividing the R&D cost by the gross operating profit; and

output means for outputting the R&D cost ratio to display means, printing means, recording medium, or another telecommunications device via a communication line.

Further, the present invention comprises:

management-finance information acquisition means for acquiring R&D cost in a first specified period and operating profit and R&D cost in a second specified period of a specified enterprise from a management-finance database containing management-finance information of enterprises;

R&D cost ratio calculation means for calculating gross operating profit by adding said operating profit and the R&D cost in the second specified period, and calculating R&D cost ratio by dividing said R&D cost by the gross operating profit; and
output means for outputting said R&D cost ratio to display means, printing means, recording medium, or another telecommunications device via a communication line.

Further, the present invention comprises:

management-finance information acquisition means for acquiring R&D cost in a first specified period, and acquiring sales profit, R&D cost included in manufacturing cost, administrative expenses and R&D cost included in the administrative expenses in a second specified period, of a specified enterprise, from a management-finance database containing management-finance information of enterprises;
R&D cost ratio calculation means for calculating gross operating profit by subtracting the administrative expenses from a value obtained by adding said sales profit, the R&D cost included in the manufacturing cost and the R&D cost included in the administrative expenses in the second specified period, and calculating R&D cost ratio through dividing said R&D cost by said gross operating profit; and
output means for outputting said R&D cost ratio to display means, printing means, recording medium, or another telecommunications device via a communication line.

Further, the present invention comprises:

management-finance information acquisition means for acquiring R&D cost in a first specified period, and total assets in a second specified period of a specified enterprise from a management-finance database containing management-finance information of enterprises;
R&D cost ratio calculation means for calculating R&D cost ratio through dividing said R&D cost by the total assets; and
output means for outputting said R&D cost ratio to display means, printing means, recording medium, or another telecommunications device via a communication line.

Further, the present invention comprises:

management-finance information acquisition means for acquiring R&D cost in a first specified period and sales volume, value added amount, gross operating profit or total assets in a second specified period of a specified enterprise from a management-finance database containing management-finance information of enterprises;
R&D cost ratio calculation means for calculating index of R&D cost ratio $\alpha$ obtained by dividing said R&D cost by the sales volume, index of R&D cost ratio $\beta$ obtained by dividing said R&D cost by the value added amount, index of R&D cost ratio $\gamma$ by dividing said R&D cost by the gross operating profit, or index of R&D cost ratio $\delta$ obtained by dividing said R&D cost by the total assets for a plurality of enterprises;
display data generation means for generating display data for displaying, index by index and enterprise by enterprise, the index of R&D cost ratio of said plurality of enterprises; and
output means for outputting said display data to display means, printing means, recording medium, or another telecommunications device via a communication line.

Further, the present invention comprises:

management-finance information acquisition means for acquiring R&D cost in a first specified period and value added amount and market value added in a second specified period of a specified enterprise from a management-finance database containing management-finance information of enterprises;
R&D cost ratio calculation means for calculating R&D cost ratio by dividing said R&D cost by the value added amount;
display data generation means for generating display data for associating and displaying said R&D cost ratio and said market value added; and
output means for outputting said display data to display means, printing means, recording medium, or another telecommunications device via a communication line.

Further, the present invention comprises:

management-finance information acquisition means for acquiring R&D cost in a first specified period and gross operating profit and market value added in a second specified period of a specified enterprise from a management-finance database containing management-finance information of enterprises;
R&D cost ratio calculation means for calculating R&D cost ratio by dividing said R&D cost by the gross operating profit;
display data generation means for generating display data for associating and displaying said R&D cost ratio and said market value added; and
output means for outputting said display data to display means, printing means, recording medium, or another telecommunications device via a communication line.

Further, the present invention comprises:

management-finance information acquisition means for acquiring expected enterprise value profit, financial assets, return on financial assets, tangible fixed assets and return on tangible fixed assets of a specified enterprise from a management-finance database containing management-finance information of enterprises;
expected intellectual property profit calculation means for calculating expected intellectual property profit by subtracting, from the expected enterprise value profit, a value obtained by adding a value obtained by multiplying said financial assets with the return on financial assets and a value obtained by multiplying the tangible fixed assets with the return on tangible assets; and
output means for outputting said expected intellectual property profit to display means, printing means, recording medium, or another telecommunications device via a communication line.

Further, the present invention comprises:

management-finance information acquisition means for acquiring fixed liabilities, return on fixed liabilities, total market value, return on total market value, financial assets, return on financial assets, tangible fixed assets and return on tangible fixed assets of a specified enterprise from a management-finance database containing management-finance information of enterprises;
expected intellectual property profit calculation means for calculating expected intellectual property profit by subtracting a value, obtained by multiplying the financial assets with the return on financial assets and a value obtained by multiplying the tangible fixed assets with the return on tangible assets, from a value obtained by adding a value obtained by multiplying said fixed liabilities with the return on fixed liabilities and a value obtained by multiplying the total market value with the return on total market value; and
output means for outputting said expected intellectual property profit to display means, printing means, recording medium, or another telecommunications device via a communication line.

BRIEF DESCRIPTION OF THE DRAWINGS

FIG. 1 is a diagram showing the overall configuration of an enterprise evaluation system;
FIG. 2 is a signal processing system block diagram of an enterprise evaluation device;
FIG. 3 is a diagram showing an example of management-finance information;
FIGS. 4A and 4B are diagrams showing an example of technical information;
FIG. 5 is a chart illustrating the respective indexes of "business, profit, and market value" calculated by the enterprise evaluation device and the calculating formula thereof;
FIG. 6 is a chart illustrating the respective indexes of "business, profit, and market value" calculated by the enterprise evaluation device and the calculating formula thereof;
FIG. 7 is a chart illustrating the respective indexes of "R&D, patent" calculated by the enterprise evaluation device and the calculating formula thereof;
FIG. 8 is a chart illustrating the respective indexes of "R&D, patent" calculated by the enterprise evaluation device and the calculating formula thereof;
FIG. 9 is a chart illustrating the respective indexes of "patent portfolio" calculated by the enterprise evaluation device and the calculating formula thereof;
FIG. 10 is a diagram showing a display example of R&D cost ratios $\alpha$, $\beta$, $\gamma$ and $\delta$ calculated regarding the 13 companies in the chemical industry;
FIG. 11 is a diagram showing a display example of associating and displaying the R&D cost ratio $\beta$ and market value added (MVA) calculated regarding the 13 companies in the chemical industry;
FIG. 12 is a diagram showing a display example of associating and displaying the R&D cost ratio $\gamma$ and market value added (MVA) calculated regarding the 13 companies in the chemical industry;
FIG. 13 is a diagram representing the transition of the expected intellectual property profit (EIPP) regarding the 13 companies in the chemical industry;
FIG. 14 is a diagram representing the transition of the expected intellectual property profit (EIPP) regarding the 10 companies in the electrical equipment industry;

FIG. 15 is a processing flowchart upon calculating and outputting the respective indexes;

FIG. 16 is a diagram showing a display example of an enterprise evaluation menu for selecting the type of index upon evaluating the enterprise value;

FIG. 17 is a diagram showing a display example displaying, in a pulldown menu format, the respective indexes existing at the lower level of the "(R) research and development index";

FIG. 18 is a diagram showing an example of the user selecting "(M) market value related index" in the display menu for selecting the type of index;

FIG. 19 is a diagram showing an example of the user selecting the item of "MVA" from the selection menu of "(M) market value related index" in the display menu for selecting the type of index;

FIG. 20 is a diagram showing a display example of an enterprise value evaluation input condition setting screen for selecting the conditions of the target industry or respective enterprises upon calculating the index for determining the enterprise value; and

FIG. 21 is a diagram showing an output condition setting screen of the calculated index.

## BEST MODE FOR CARRYING OUT THE INVENTION

Embodiments of the present invention are now explained with reference to the drawings.

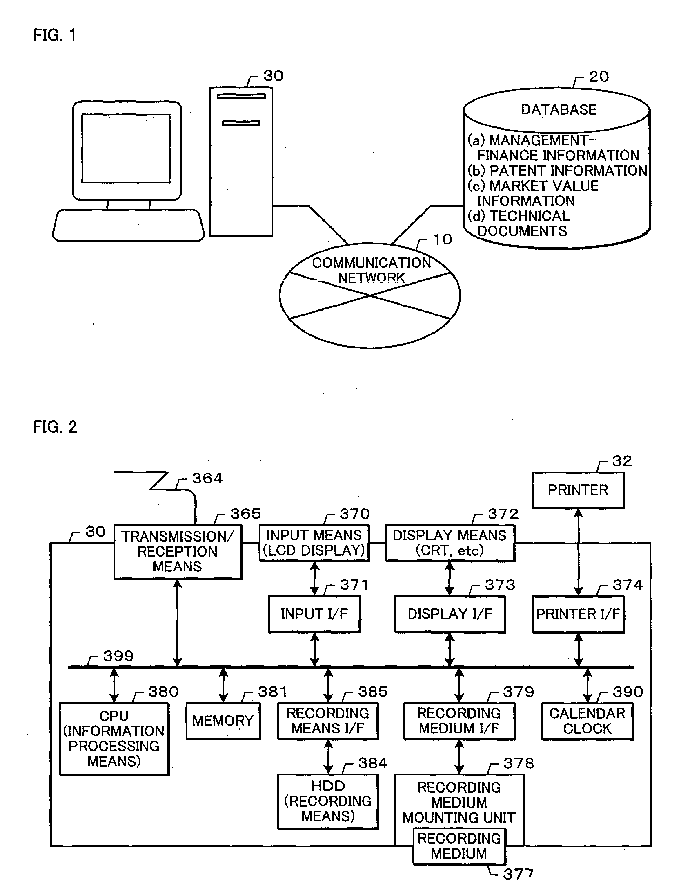

FIG. 1 is a diagram showing the overall configuration of an enterprise evaluation system according to the present invention.

As shown in FIG. 1, the enterprise value evaluation system is configured from a database 20 recording various types of information such as management-finance information, technical documents (in addition to patent information, information relating to utility models and technical journals, etc.), market value information (numerical value information of the market value), threshold for determining the validity of the enterprise value, determination result of the validity and category based on such threshold; an enterprise evaluation device 30 for inputting various types of information such as management-finance information, technical documents and market value information and outputting the judgment results of the validity of the enterprise value; and a communication network 10 such as the Internet or dedicated communication line for communicably connecting the enterprise evaluation device 30 and database 20.

Incidentally, the database 20 may be provided inside the enterprise evaluation device 30.

FIG. 2 is a signal processing system block diagram of an enterprise evaluation device 30 according to the present invention.

As shown in FIG. 2, the information transmission-reception unit of the enterprise evaluation device 30 is provided with a transmission-reception means 365 (including the functions of a management-finance information acquisition means or output means) for transmitting and receiving information to and from another telecommunications device via the communication network 364 such as a public line or telecommunications network.

Further, the enterprise evaluation device 30 is also provided with an input interface 371 for acquiring various types of information input by the user via the input means 370 and transmitting this to the information processing means described later, and outputting display commands to an LCD or the like based on instructions from the information processing means, a display means 372 for displaying information such as images or texts, graphs or charts, a display interface 373 (including the function of an output means) for outputting image signals for display to the display means 372 based on the command from the information processing means, and a printer interface 374 for outputting information such as images or texts, graphs or charts to a printer 32 or the like. Incidentally, the input means 370 includes input devices such as a keyboard, mouse, tablet and the like.

Further, the enterprise evaluation device 30 is also provided with a recording medium mounting unit 378 for detachably mounting a recording medium 377, and a recording medium interface 379 (including the functions of a management-finance information acquisition means or output means) for recording and reading various types of information in and from the recording medium 377. Incidentally, the recording medium 377 is a detachable recording medium in a magnetic recording format or optical recording format as represented by semiconductors such as a memory card, MO, magnetic disk and so on.

Moreover, the enterprise evaluation device 30 is also provided with an information processing means 380 for controlling the overall enterprise evaluation device 30, and a memory 381 configured from a ROM recording programs to be executed by the information processing means 380 and various constants, and a RAM which is a recording means to become the working area upon the information processing means 380 executing processing.

Further, the information processing means 380 is able to realize the various functions of a management-finance information acquisition means, R&D cost ratio calculation means, expected intellectual property profit calculation means, display data generation means and output means. Incidentally, instead of the information processing means 380 performing all of the processing to be performed by the foregoing means, a plurality of dedicated processing devices may be provided so that the respective processing devices can share and execute such processing in order to achieve the objects of the present invention.

Moreover, the enterprise evaluation device 30 is also provided with a recording means 384 such as a hard disk recording various types of information; for example, various constants relating to the processing of the enterprise evaluation device 30, attribute information upon communicably connecting to a telecommunications device on a network, connection information such as a URL (Uniform Resource Locators), gateway information, DNS (Domain Name System), management-finance information relating to the management of the enterprise, technical documents relating to patents, market value information, threshold for determining the enterprise value and determination results of validity based on such threshold; recording means interface 385 (including the functions of a management-finance information acquisition means or output means) for reading information recorded in the recording means 384 and writing information to the recording means 384; and a calendar clock 390 for clocking the time.

The respective peripheral circuits of the information processing means 380, display interface 373, memory 381, recording means interface 385 and calendar clock 390 in the enterprise evaluation device 30 are connected to a bus 399, and the respective peripheral circuits can be controlled based on the processing program to be executed by the information processing means 380.

Incidentally, various databases of the management-finance information, technical documents and market value information may be stored in the recording means 384, provided by the storage medium 377 such as a CD-ROM, CD-RW, DVD or MO, or acquired from another telecommunications device (database 20 or the like) via the communication network 364.

Further, the enterprise evaluation device 30 can be realized by using various types of computers such as a personal computer or workstation. Moreover, computers may be connected via a network to share and implement the functions.

The management-finance information acquisition means of the transmission-reception means 365, recording means interface 385, recording medium interface 379 and information processing means 380 is capable of acquiring the R&D cost in a first specified period and the sales volume, value added amount, gross operating profit or total assets in a second specified period of a specified enterprise from a management-finance information database (database 20, recording means 384, recording medium 377 or the like) recording information showing the management-finance information such as the finance information of the enterprise.

Further, the management-finance information acquisition means of the transmission-reception means 365, recording means interface 385, recording medium interface 379 and information processing means 380 is capable of acquiring the R&D cost in a first specified period and the operating profit and R&D cost in a second specified period of a specified enterprise from a management-finance information database (database 20, recording means 384, recording medium 377 or the like) containing management-finance information such as the finance information of enterprises.

Moreover, the management-finance information acquisition means of the transmission-reception means 365, recording means interface 385, recording medium interface 379 and information processing means 380 is.capable of acquiring the R&D cost in a first specified period and the sales profit, R&D cost included in the manufacturing cost, administrative expenses, and R&D cost included in the administrative expenses in a second specified period, of a specified enterprise, from a management-finance information database (database 20, recording means 384, recording medium 377 or the like) containing management-finance information such as the finance information of enterprises.

Further, the management-finance information acquisition means of the transmission-reception means 365, recording means interface 385, recording medium interface 379 and information processing means 380 is capable of acquiring the R&D cost in a first specified period and the value added amount and market value added in a second specified period of a specified enterprise from a management-finance information database (database 20, recording means 384, recording medium 377 or the like) containing management-finance information such as the finance information of enterprises.

Moreover, the management-finance information acquisition means of the transmission-reception means 365, recording means interface 385, recording medium interface 379 and information processing means 380 is capable of acquiring the R&D cost in a first specified period and the gross operating profit and market value added in a second specified period of a specified enterprise from a management-finance information database (database 20, recording means 384, recording medium 377 or the like) containing management-finance information such as the finance information of enterprises.

Further, the management-finance information acquisition means of the transmission-reception means 365, recording means interface 385, recording medium interface 379 and information processing means 380 is capable of acquiring the expected enterprise value profit, financial assets, return on financial assets, tangible fixed assets and return on tangible fixed assets of a specified enterprise from a management-finance information database (database 20, recording means 384, recording medium 377 or the like) containing management-finance information such as the finance information of enterprises.

Moreover, the management-finance information acquisition means of the transmission-reception means 365, recording means interface 385, recording medium interface 379 and information processing means 380 is capable of acquiring the fixed liabilities, return on fixed liabilities, total market value, return on total market value, financial assets, return on financial assets, tangible fixed assets and return on tangible fixed assets of a specified enterprise from a management-finance information database (database 20, recording means 384, recording medium 377 or the like) containing management-finance information such as the finance information of enterprises.

Further, the R&D cost ratio calculation means of the information processing means 380 and the like is capable of calculating the index of R&D cost ratio $\alpha$ obtained by dividing the acquired R&D cost by the sales volume, index of R&D cost ratio $\beta$ obtained by dividing the acquired R&D cost by the value added amount, index of R&D cost ratio $\gamma$ by dividing the acquired R&D cost by the gross operating profit, or index of R&D cost ratio $\delta$ obtained by dividing the acquired R&D cost by the total assets regarding one or a plurality of enterprises.

Moreover, the R&D cost ratio calculation means of the information processing means 380 and the like is capable of calculating the gross operating profit by adding the acquired operating profit and R&D cost, and calculating the R&D cost ratio by dividing the acquired R&D cost by the gross operating profit.

Further, the R&D cost ratio calculation means of the information processing means 380 and the like is capable of calculating the gross operating profit by subtracting the administrative expenses from a value obtained by adding the acquired sales profit and the R&D cost included in the manufacturing cost and the R&D cost included in the administrative expenses, and calculating the R&D cost ratio by dividing the acquired R&D cost by the calculated gross operating profit.

Moreover, the R&D cost ratio calculation means of the information processing means 380 and the like is capable of calculating the R&D cost ratio by dividing the acquired R&D cost by the value added amount.

Further, the R&D cost ratio calculation means of the information processing means 380 and the like is capable of calculating the R&D cost ratio by dividing the acquired R&D cost by the gross operating profit.

Moreover, the expected intellectual property profit calculation means of the information processing means 380 and the like is capable of calculating the expected intellectual property profit by subtracting, from the expected enterprise value profit, a value obtained by adding the value obtained by multiplying the acquired financial assets with the return on financial assets and the value obtained by multiplying the tangible fixed assets with the return on tangible assets.

Further, the expected intellectual property profit calculation means of the information processing means 380 and the like is capable of calculating the expected intellectual property profit by subtracting the value obtained by multiplying the financial assets and the return on financial assets and the value obtained by multiplying the tangible fixed assets and the return on tangible assets from a value obtained by adding the value obtained by multiplying the acquired fixed liabilities and the return on fixed liabilities and the value obtained by multiplying the total market value and the return on total market value.

Moreover, the display data generation means of the information processing means 380 and the like is capable of generating display data for displaying, index by index and enterprise by enterprise, the calculated indexes of R&D cost ratio of the plurality of enterprise.

Further, the display data generation means of the information processing means 380 and the like is capable of generating display data for associating and displaying the calculated R&D cost ratio and the acquired market value added.

Moreover, the output means of the display interface 373, transmission-reception means 365, recording means interface 385, recording medium interface 379, printer interface 374, information processing means 380 and the like is capable of outputting the calculated R&D cost ratio to display means, printing means, recording medium, or another telecommunications device via a communication line.

Further, the output means of the display interface 373, transmission-reception means 365, recording means interface 385, recording medium interface 379, printer interface 374, information processing means 380 and the like is capable of outputting the display data to display means, printing means, recording medium, or another telecommunications device via a communication line.

Moreover, the output means of the display interface 373, transmission-reception means 365, recording means interface 385, recording medium interface 379, printer interface 374, information processing means 380 and the like is capable of outputting the calculated expected intellectual property profit to display means, printing means, recording medium, or another telecommunications device via a communication line.

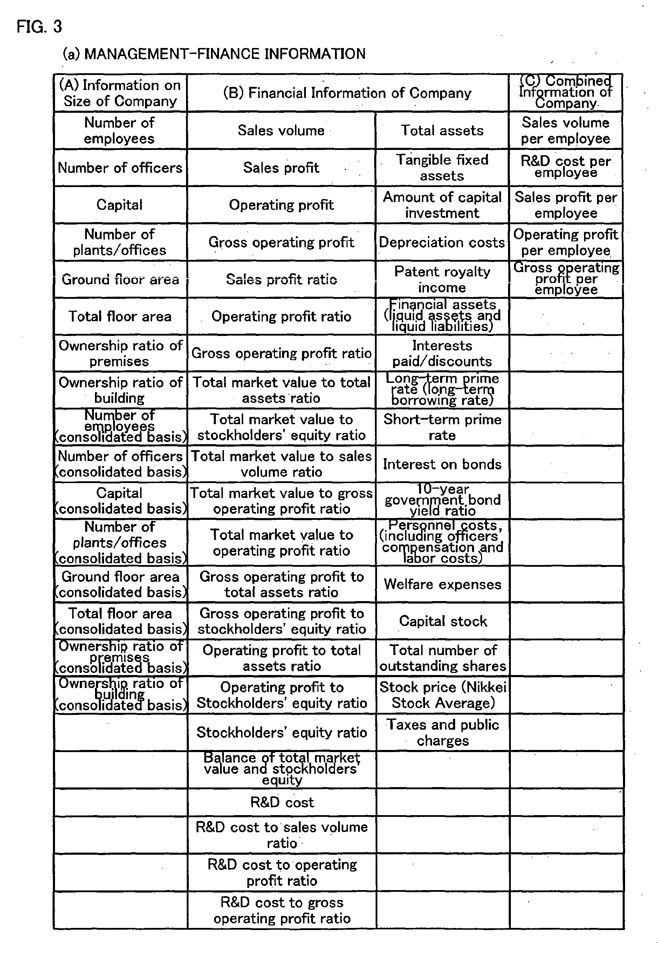

FIG. 3 is a chart representing an example of management-finance information recorded in the recording means of the database 20 or the like.

As shown in FIG. 3, management-finance information includes information showing the size of the company, information showing the financial information of the company, and combined information of the company calculated by combining the various types of information of the company. Incidentally, as the data of management-finance information, the annual security report of the company to be researched, and information acquired from commercial databases provided by newspaper publishers, research institutes and the like may be used.

Information showing the size of the company includes the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis).

The financial information of the company includes the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, R&D cost, R&D cost to sales volume ratio, R&D cost to gross operating profit ratio, gross operating profit ratio, R&D cost to operating profit ratio or gross operating profit.

Moreover, finance information of the company includes total assets, tangible fixed assets, amount of capital investment, depreciation costs, patent royalty income, financial assets (liquid assets and liquid liabilities), interests paid, discounts, long-term prime rate (long-term borrowing rate), short-term prime rate, interest on bonds, 10-year government bond yield ratio, personnel costs (including officers' compensation and labor costs), welfare expenses, capital stock, total number of outstanding shares, stock price (Nikkei Stock Average) or taxes and public charges.

The combined information of the company includes the sales volume per employee, R&D cost per employee, sales profit per employee, operating profit per employee, gross operating profit per employee and so on.

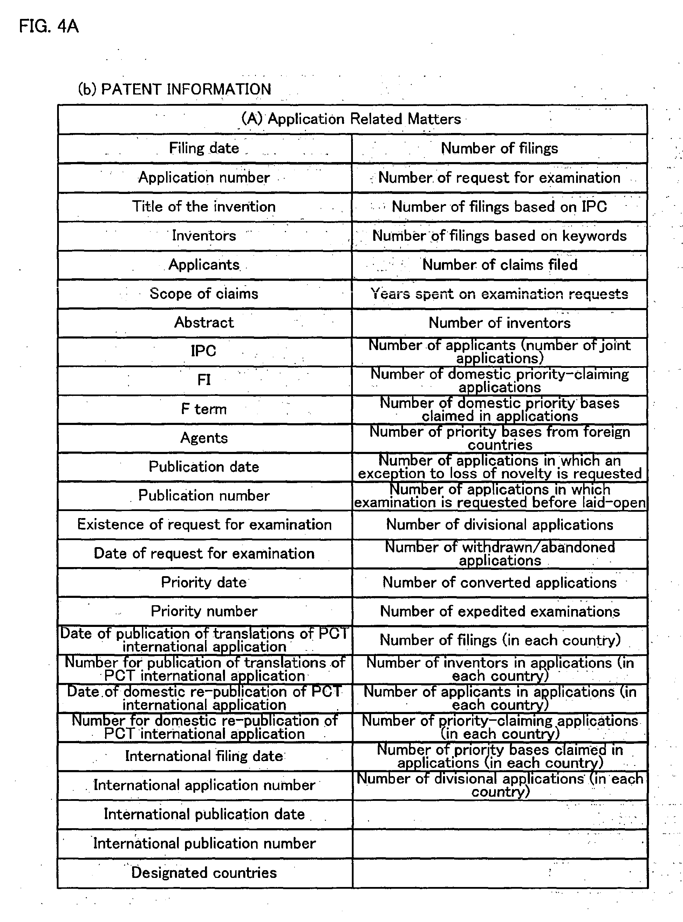

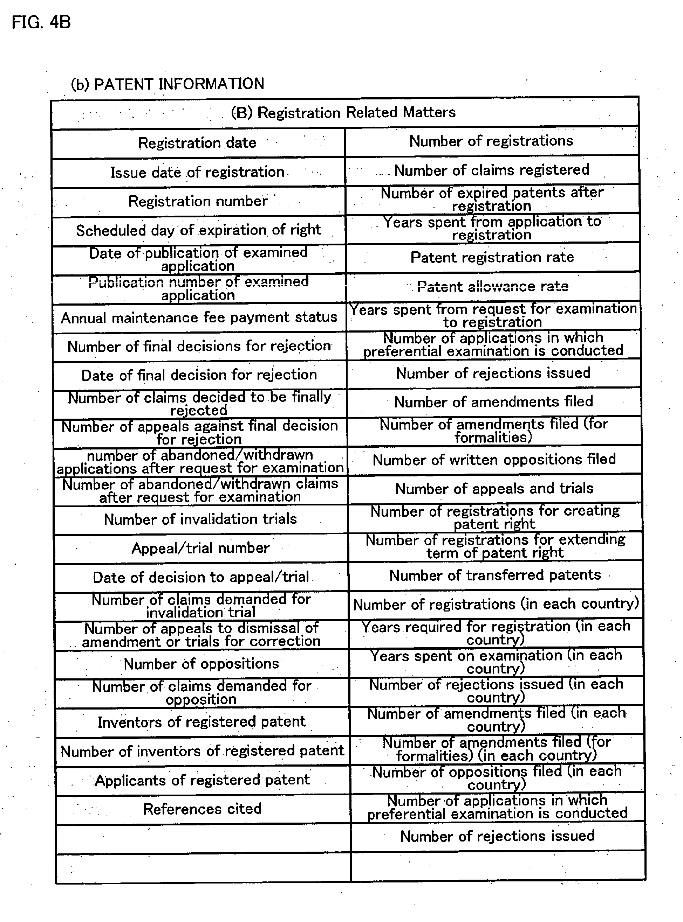

FIGS. 4A and 4B are diagrams showing an example of a technical document recorded in a recording means of the database 20 or the like.

As shown in FIGS. 4A and 4B, technical documents contain patent documents such as filing information and registration information of patents and utility models. As data of technical documents, for instance, the Industrial Property Digital Library database of the Japanese Patent Office, information relating to patents and utility models acquired from CD-ROM gazettes or other technical journals may be used.

Application information of an invention includes, for instance, per enterprise, the following: the filing date, application number, title of the invention, inventors, applicants, scope of claims, abstract, IPC, FI, F Term, agents, publication date, publication number, existence of request for examination, date of request for examination, priority date, priority number, date of publication of translations of PCT international application, number for publication of translations of PCT international application, date of domestic re-publication of PCT international application, number for domestic re-publication of PCT international application, international filing date, international application number, international publication date, international publication number, designated country, number of filings, number of examinations requested, number of filings based on IPC, number of filings based on keywords, number of claims filed, years spent on examination requests, number of inventors, number of applicants (number of joint applications), number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn/abandoned applications, number of converted applications, number of expedited examinations, number of filings in each foreign country, number of inventors in each foreign country, number of applicants in each foreign country, number of priority-claiming applications in each foreign country, number of priority bases claimed in applications in each foreign country or number of divisional applications in each foreign country.

Further, registration information of an invention includes, for example, per enterprise, the following: the registration date, issue date of registration, registration number, scheduled day of expiration of right, date of publication of examined application, publication number of examined application, annual maintenance fee payment status, number of final decisions for rejection, date of final decision for rejection, number of claims decided to be finally rejected, number of appeals against final decision for rejection, number of abandoned/withdrawn applications after request for examination, number of abandoned/withdrawn claims after request for examination, number of invalidation trials, appeal/trial number, date of decision to appeal/trial, number of claims demanded for invalidation trial, number of appeals to dismissals of amendment or trials for correction, number of oppositions, number of claims demanded for opposition, inventors of registered patent, number of inventors of registered patent, applicants of registered patent, references cited, number of registrations, number of claims registered, number of expired patents after registration, years spent from application to registration, patent registration rate, patent allowance rate, years spent from request for examination to registration, number of applications in which preferential examination is conducted, number of rejections issued, number of amendments filed, number of amendments filed for formalities, number of registrations for creating patent right, number of registrations for extending term of patent right, number of transferred patents, number of registrations in each country, years required for registration in each country, years spent on examination in each country, number of rejections issued in each country, number of amendments filed in each country, number of amendments filed for formalities in each country, number of oppositions filed in each country, number of applications in which preferential examination is conducted or number of rejections issued.

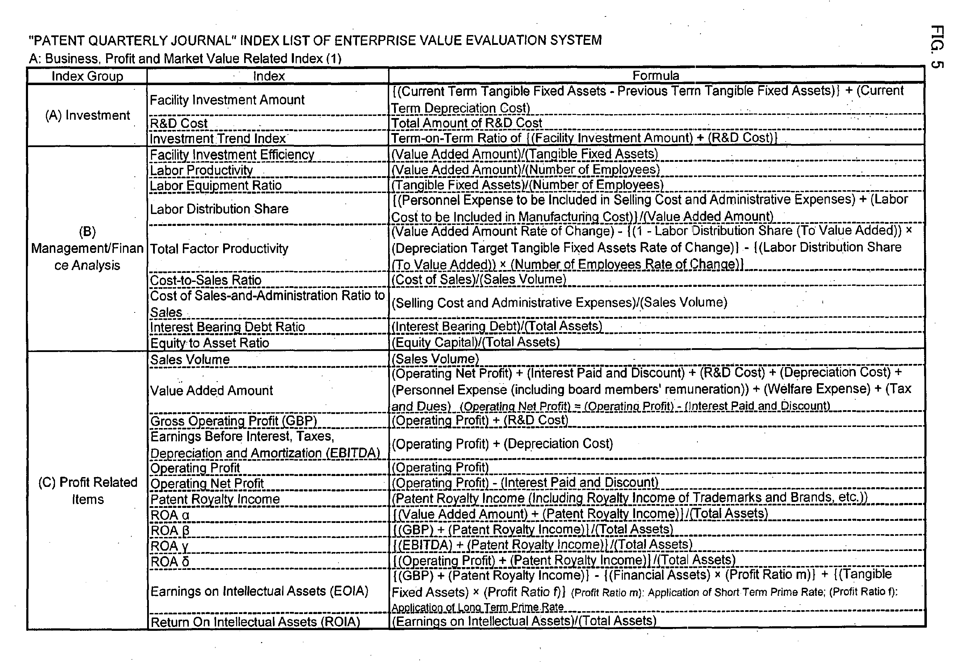

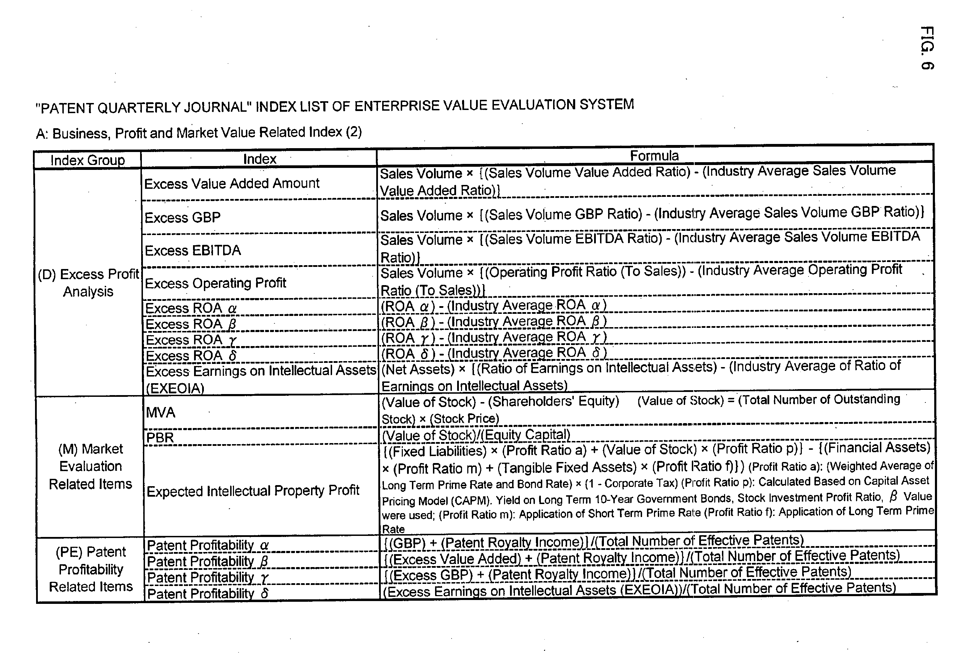

FIG. 5 and FIG. 6 are charts illustrating examples of the respective indexes of "business, profit, and market value" calculated by the enterprise evaluation device pertaining to the present invention and the calculating formula thereof.

As shown in FIG. 5 and FIG. 6, as the index groups, "(A) investment", "(B) management-finance analysis", "(C) profit related", "(D) excess profit analysis", "(M) market value related", and "(PE) patent profitability are provided, and the names and outline of the respective indexes and the calculating formula thereof are indicated in each of these groups.

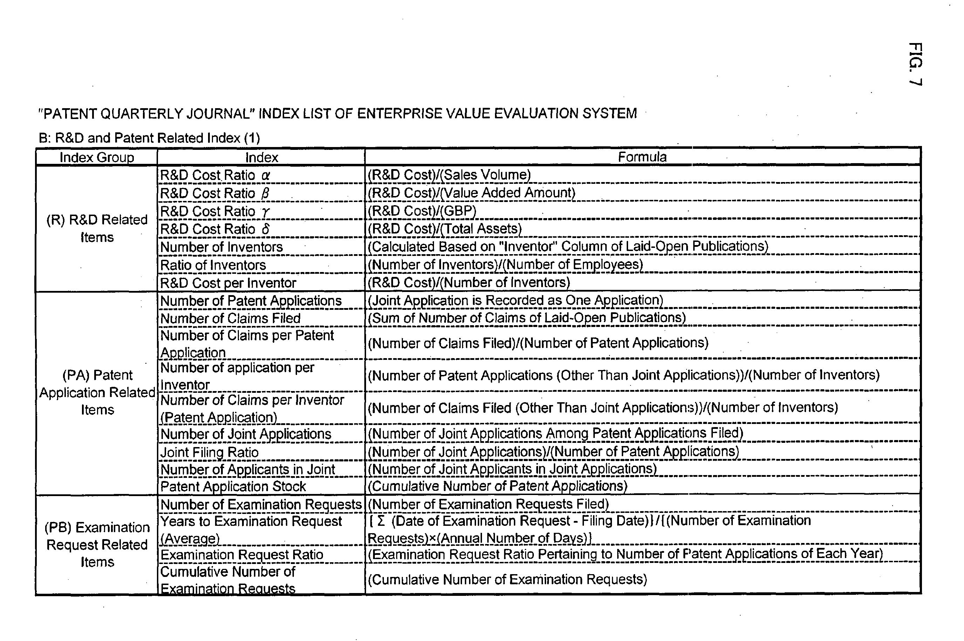

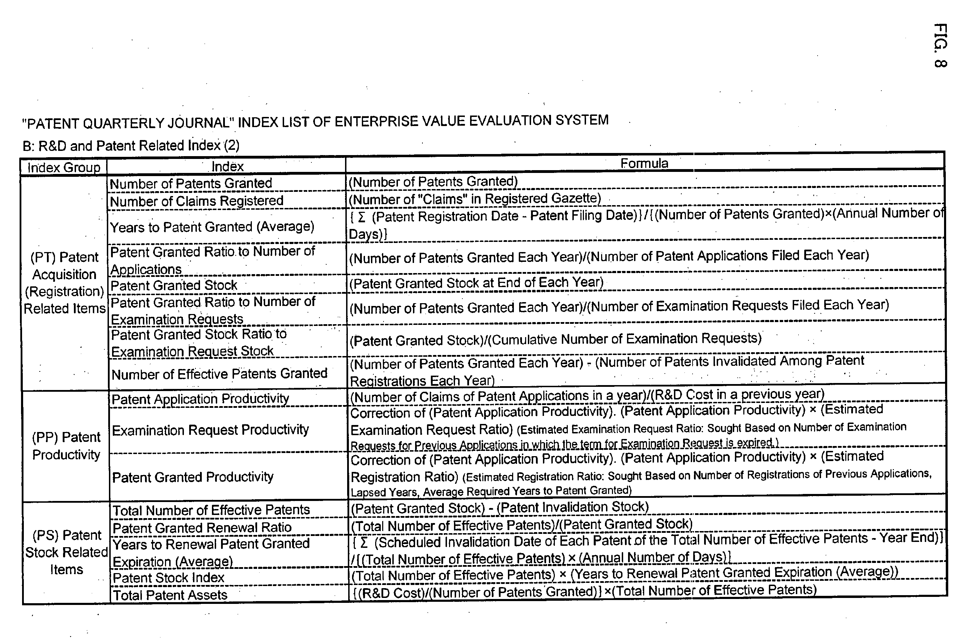

Further, FIG. 7 and FIG. 8 are charts illustrating examples of the index of "R&D, patent" calculated by the enterprise evaluation device pertaining to the present invention.

As shown in FIG. 7 and FIG. 8, as the index groups, "(R) research and development related", "(PA) patent application related", "(PB) examination request related", "(PT) patent acquisition (registration) related", "(PP) patent productivity" and "(PS) patent stock related" are provided, and the names and outline of the respective indexes and the calculating formula thereof are indicated in each of these groups.

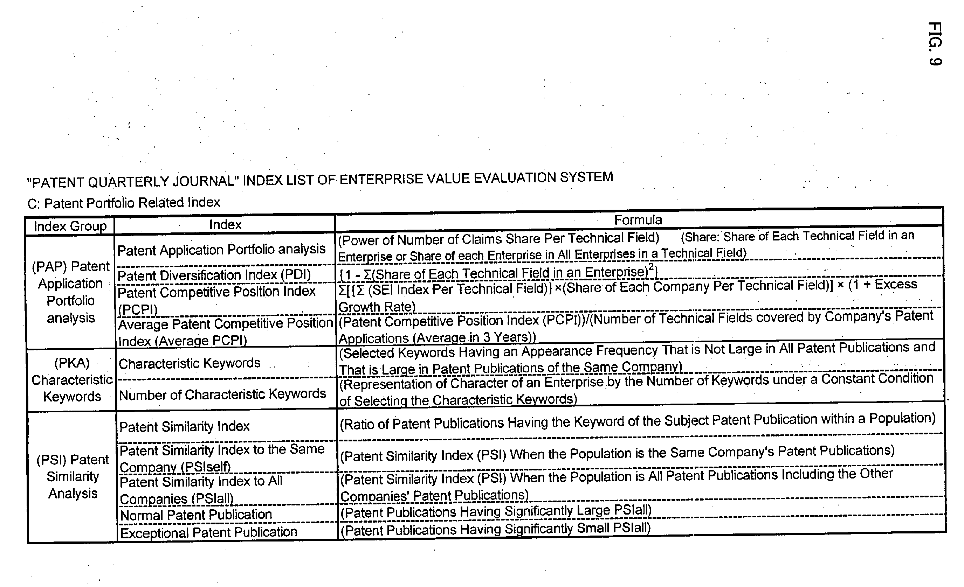

FIG. 9 is a chart illustrating an example of the "patent portfolio" index calculated by the enterprise evaluation device pertaining to the present invention.

As shown in FIG. 9, as the index groups, "(PAP) patent application portfolio analysis", "(PKA) characteristic keywords", and "(PSI) patent similarity ratio analysis" are provided, and the names and outline of the respective indexes and the calculating formula thereof are indicated in each of these groups.

Next, the respective indexes pertaining to the present invention are explained.

In the present invention, among the respective indexes shown in FIG. 7, the two broad classifications below and the respective indexes included in the lower hierarchy are explained. Further, names of the respective indexes are defined as "research and development index (R)" and so on.

R&D Patent Index: Research and Development Index (R)

(1-1) R&D cost ratio $\alpha$
(1-2) R&D cost ratio $\beta$
(1-3) R&D cost ratio $\gamma$
(1-4) R&D cost ratio $\delta$
(1-5) Number of inventors
(1-6) Inventor ratio
(1-7) R&D cost per inventor

The foregoing research and development index (R) is an index for judging the attitude of a specified enterprise to research and development based on the size of investment made in the research and development activities. The research and development index (R) includes at least one or more of the foregoing indexes.

(1-1) R&D cost ratio $\alpha$

The R&D cost ratio a is an index showing the ratio of the "R&D cost" to "sales volume" of a specified enterprise in each specified period, and is a numerical value also referred to as the "R&D cost to sales volume ratio" or "R&D ratio". The calculating formula thereof is shown below (Formula 1).

$$\text{R\&D cost ratio } \alpha = (\text{R\&D cost}) / (\text{sales volume}) \dots(\text{Formula 1})$$

Provided,
R&D cost = R&D cost of a specified enterprise in a first specified period;
Sales volume = sales volume of a specified enterprise in a second specified period;
"First specified period" shows a period such as from April 1, 2001 to March 31, 2002; and.
"Second specified period" shows a period such as from April 1, 2003 to March 31, 2004.

The first specified period and second specified period may be set as different periods as in the foregoing example, or may be set as the same period.

In the foregoing calculation example, on the premise that roughly 2 years are required until the results of research and development are reflected in the sales volume of products, a difference is provided between the investment period of the R&D cost (first specified period) and the period in which the investment was reflected in the sales volume (second specified period) upon calculating the R&D cost ratio $\alpha$. The technical results obtained from the research and development are likely to contribute to future business results, and not the business results of the current year. Nevertheless, as with a major corporation in which the annual R&D cost undergoes a relatively stable transition, the necessity to separately set a first specified period and a second specified period is small. Further, as with a venture company in which the R&D cost changes year by year, it is desirable to separately set the first specified period and the second specified period.

As shown in (Formula 1) upon calculating the R&D cost ratio $\alpha$, the R&D cost made by a specified enterprise in a specified period is divided by the sales volume of the specified enterprise in the specified period.

With the value of the sales volume which is one element used upon calculating the index of the R&D cost ratio $\alpha$, the production cost and manufacture cost in the sales volume will largely differ depending on the industrial structure of business categories and enterprises. Therefore, the large and small of the value of this R&D cost ratio $\alpha$ does not necessarily show the investment tendency in the research and development of a specified enterprise. Thus, it is desirable to simultaneously use the indexes of R&D cost ratios $\beta$, $\gamma$ or $\delta$ upon evaluating enterprises.

(1-2) R&D cost ratio $\beta$

The R&D cost ratio $\beta$ is an index showing the ratio of the "R&D cost" to "value added amount" of a specified enterprise in each specified period. The calculating formula thereof is shown below (Formula 2).

$$\text{R\&D cost ratio } \beta = (\text{R\&D cost}) / (\text{value added amount}) \ldots(\text{Formula 2})$$

Provided,
R&D.cost = R&D cost of a specified enterprise in a first specified period;
Value added amount = value added amount of a specified enterprise in a second specified period;
"First specified period" shows a period such as from April 1, 2001 to March 31, 2002; and
"Second specified period" shows a period such as from April 1, 2003 to March 31, 2004.

The first specified period and second specified period may be set as different periods as in the foregoing example, or may be set as the same period.

As shown in (Formula 2) upon calculating the R&D cost ratio $\beta$, the R&D cost made by a specified enterprise in a specified period is divided by the value added amount of the specified enterprise in the specified period.

Since the R&D cost ratio $\beta$ is an index showing the degree of ratio distributed to the research and development activities among the total amount of value created by a specified enterprise in a specified period, this R&D cost ratio $\beta$ can be also referred to as the "research and development distribution ratio". Therefore, this R&D cost ratio $\beta$ can be considered to show an R&D cost ratio that is more essential than the index of the R&D cost ratio $\alpha$ showing the ratio to sales volume shown in (Formula 1).

Here, "value added amount" is the value added amount generated by a specified enterprise in a specified period and is used for measuring the value created by internal production factors (personnel, articles, money) among the sales volume. Since the value added amount distributed to the internal production factors is the same meaning as the total value generated before the distribution, this shows the total amount of value created by a specified enterprise in a specified period. Not only does the value added amount represent the results after distribution to the respective factors such as the operating profit and current profit, it is also able to capture the total value created before the distribution, and, therefore, this is useful in analyzing the profitability of a specified enterprise. The calculation example of a value added amount is shown below (Formula 3).

$$\text{Value added amount} = (\text{net operating profit}) + (\text{interest paid/discount}) + (\text{R\&D cost}) + (\text{depreciation cost}) + (\text{personnel cost (including compensation for directors)}) + (\text{welfare expense}) + (\text{tax and public charges}) \ldots(\text{Formula 3})$$

Since (net operating profit) = (operating profit) - (interest paid/discount), the above (net operating profit) + (interest paid/discount) is equal to an (operating profit).

(1-3) R&D cost ratio $\gamma$

The R&D cost ratio $\gamma$ is an index showing the ratio of the "R&D cost" to "gross operating profit (GBP)" of a specified enterprise in each specified period. The calculating formula thereof is shown below (Formula 4).

$$\text{R\&D cost ratio } \gamma = (\text{R\&D cost}) / (\text{gross operating profit (GBP)})$$

$$\ldots (\text{Formula 4})$$

Provided
R&D cost = R&D cost of a specified enterprise in a first specified period;
Gross operating profit = gross operating profit of a specified enterprise in a second specified period;
"First specified period" shows a period such as from April 1, 2001 to March 31, 2002; and
"Second specified period" shows a period such as from April 1, 2003 to March 31, 2004.
The first specified period and second specified period may be set as different periods as in the foregoing example, or may be set as the same period.
The gross operating profit (GBP) disposed as the denominator of (Formula 4) is the amount of profit shown in (Formula 5) below. The following (Formula 5) represents the relationship between the gross operating profit and other profit indexes.

$$\text{Gross operating profit}$$

$$= \{(\text{sales profit}) + (\text{R\&D cost included in manufacturing cost})\}$$

$$- \{(\text{administrative expenses}) - (\text{R\&D cost included in}$$

$$\text{administrative expenses})\}$$

$$= (\text{operating profit}) + (\text{R\&D cost}) \ldots (\text{Formula 5})$$

Provided,
Operating profit = (sales profit) - (administrative expenses) R&D cost = (R&D cost included in manufacturing cost) + (R&D cost included in administrative expenses)
Pursuant to the revision of the accounting standards, as a general rule in Japan, R&D cost must be recorded entirely as expenses in the settlement of accounts after the term ending March 2000. Conventionally, there were numerous companies that did not disclose the breakdown of the R&D cost included in the manufacturing costs and general administrative expenses. Nevertheless, after the enforcement of these regulations, the amount of R&D cost pertaining to the calculation of profits and losses became clear. Thereupon, for the purpose of multilaterally analyzing the actual status of such R&D cost of the company, index referred to as the "gross operating profit (GBP)" has been developed.
This is an estimate of hypothetical profits (gross profit generated from the main business excluding research and development activities; that is, the manufacture and sale activities) sought by adding the R&D cost to the operating profit. As a result of the R&D cost being entirely recorded as expenses, upon calculating profits and losses, the more research and development activities are positively engaged, the more operating profit will be compressed. Thus, while the importance of technology development (intellectual property) is being discussed, there is a problem in that it is difficult to grasp the actual condition of the profitability of the company only from the perspective of operating profit. The foregoing estimate is considered to provide a perspective to this problem.
This gross operating profit (GBP) is an index that is positioned roughly between the sales profit and operating profit. By using the gross operating profit simultaneously with the sales profit and operating profit, it will be possible to grasp the profitability of the enterprise from many angles. Incidentally, the sales profit is the gross margin sought by subtracting the manufacturing cost from the sales volume. Nevertheless, some R&D cost are included in manufacturing costs, whereas others are included in general administrative expenses. Thus, strictly speaking, the gross operating profit cannot be called a profit index positioned between the sales profit and operating profit.

Upon calculating the R&D cost ratio γ, as shown in (Formula 4), the R&D cost made by a specified enterprise in a first specified period is divided by the gross operating profit of the specified enterprise in a second specified period.

The R&D cost ratio γ is an index showing the degree of ratio distributed to the research and development activities among the business profit obtained from the manufacture and sales activities of a specified enterprise in a specified period. Thus, an enterprise in which the value of the R&D cost ratio γ is calculated as a large value can be considered to have a high R&D investment tendency, and, an enterprise in which such value is calculated near 0 can be considered to have a tendency of securing profits of its current business rather than R&D investment.

From the nature of the index of the R&D cost ratio γ, there may be cases where this ratio is swollenly calculated since the operating profit significantly decreased due to one reason or another. In this case, since this does not mean that the R&D investment tendency is particularly high, care must be taken upon observing the index. Incidentally, in an enterprise in which the operating profit is 0 or less, the R&D cost ratio γ will be a meaningless value, and, therefore, the R&D cost ratio γ does not have to be calculated in this case.

(1-4) R&D cost ratio δ

The R&D cost ratio δ is an index showing the ratio of the "R&D cost" to "total assets" of a specified enterprise in each specified period. The calculating formula thereof is shown below (Formula 6).

$$\texttt{R\&D cost ratio } \delta \texttt{ = (R\&D cost) / (total assets) ...(Formula 6)}$$

Provided,
R&D cost = R&D cost of a specified enterprise in a first specified period;
Total assets = total assets of a specified enterprise in a second specified period;
"First specified period" shows a period such as from April 1, 2001 to March 31, 2002; and "Second specified period" shows a period such as from April 1, 2003 to March 31, 2004.

The first specified period and second specified period may be set as different periods as in the foregoing example, or may be set as the same period.

Whereas the respective indexes of R&D cost ratio α, β and γ are for measuring the R&D cost ratio in relation to each size of profit (flow), the R&D cost ratio δ shown in (Formula 6) is for measuring the size of R&D cost viewed from the size of assets (stock).

Indexes of the number of inventors and the like in patent applications and utility model applications are now explained.

(1-5) Number of inventors

The number of inventors is a numerical value obtained by counting the number of inventors of an enterprise from the column of "inventors" described in publications of unexamined applications such as patent applications or utility model applications filed by a specified enterprise in a specified period. Although the number of inventors will not necessarily coincide with the number of employees engaged in the research and development activities, it is one of the most important indexes for grasping the number of people involved in the primary technical development and estimating the number of development members. Further, by comparing the number of inventors of a plurality of enterprises in a predetermined technical field, it is possible to compare the scale of technical development in such technical field. Moreover, by representing the transition in the number of inventors of each year with a graph or the like, it is possible to know the trend of the technical development in a specified enterprise.

(1-6) Inventor ratio

The inventor ratio is a numerical value obtained by dividing the number of "inventors" described in publications of unexamined applications such as patent applications or utility model applications filed by a specified enterprise in a specified period by the number of employees of such specified enterprise, and is an index showing the ratio of "number of inventors" among the "number of employees".

```
Inventor ratio = (number of inventors) / (number of employees)
```

...(Formula 7)

As a result of calculating and displaying the number of inventors ratio, it is possible to know the ratio accounting for the overall personnel resources being injected by a specified enterprise in research and development, and the research and development tendency of such specified enterprise can be known thereby.

(1-7) R&D cost per inventor

The R&D cost per inventor is a numerical value obtained by dividing the R&D cost of a specified enterprise in a first specified period by the number of inventors of patent applications or utility model applications filed by the specified enterprise in a second specified period, and is an index showing the "R&D cost" per "inventor" in each specified period of the respective enterprises.

```
R&D cost per inventor = (R&D cost) / (number of inventors)
```

...(Formula 8)

Provided,
R&D cost = R&D cost of a specified enterprise in a first specified period;
Number of inventors = number of inventors of patent applications or utility model applications filed by a specified enterprise in a second specified period;
"First specified period" shows a period such as from April 1, 2001 to March 31, 2002; and
"Second specified period" shows a period such as from April 1, 2003 to March 31, 2004.
The first specified period and second specified period may be set as different periods as in the foregoing example, or may be set as the same period.
As a result of calculating and displaying the R&D cost per inventor, it is possible to know how much research and development funds a specified enterprise injected per inventor, and it is thereby possible to know the tendency of such specified enterprise. Further, this can also be compared among a plurality of enterprises.
The respective indexes of the market value related index (M) in the business, profit, and market value index among the respective indexes shown in FIG. 6 are explained.
Business, Profit, and Market Value: Market value related index (M)

(2-1) Market value added (MVA)
(2-2) Price book value ratio (PBR)
(2-3) Expected intellectual property profit (EIPP)

The market value related index (M) includes at least one or more indexes among the foregoing market value added (MVA), price book value ratio (PBR) and expected intellectual property profit (EIPP).

(2-1) Market value added (MVA)

The market value added is an off-balance enterprise value amount sought by deducting the stockholders' equity (amount of net assets) from the total market value. The calculating formula thereof is shown below (Formula 9).

```
Market value added (MVA)

= (total market value) - (stockholders' equity)

= {(total number of outstanding shares) × (stock price)} -

(stockholders' equity) …(Formula 9)
```

Provided,
Total market value = (total number of outstanding shares) $\times$ (stock price)

As the stock price, the closing price or indicative price at the account end of each enterprise is used. In certain cases, a stock price at the time of analysis may also be used depending on the timing of analysis.

Since the market value added (MVA) is a value obtained by deducing the financial stockholders' equity amount from the enterprise value evaluation amount in the market (total market value), this can also be considered the evaluation of the off-balance assets of the enterprise in the market.

If the market value added (MVA) of an enterprise that possesses useful patents that will yield future profits without bad debts and deteriorated assets is 0 or less, it is possible that this enterprise is being underestimated in the market.

(2-2) Price book value ratio (PBR)

The price book value ratio is a value obtained by dividing the total market value by the equity capital. The calculating formula thereof is shown below (Formula 10).

```
Price book value ratio (PBR) = (total market value) / (equity

capital) …(Formula 10)
```

The price book value ratio (PBR) is an index showing the level of the stock price in relation to the stockholders' equity (amount of net assets) per share. Therefore, when this value is 1 or less, this means that the market is viewing this enterprise to be free of off-balance assets, or has latent
loss (deterioration of on-balance assets or undisclosed debts) in excess of such asset value.

(2-3) Expected intellectual property profit (EIPP)

The expected intellectual property profit is the amount of expected return obtained by deducting the theoretical expected return to be obtained from the financial assets and tangible fixed assets from the expected return to be obtained from the evaluation amount of the enterprise value in the market {(liabilities) + (total market value)}. The calculating formula thereof is shown below (Formula 11).

```
Expected intellectual property profit (EIPP) = (expected enterprise value profit) - {(financial assets) × (profit ratio

m) + (tangible fixed assets) × (profit ratio f)} …(Formula 11)
```

Provided,
Profit ratio m = return on financial assets
Profit ratio f = return on tangible fixed assets
Here,

Expected enterprise value profit = (fixed liabilities) × (profit ratio a) + (total market value) × (profit ratio p)
Provided,
Profit ratio a = return on fixed liabilities
Profit ratio p = return on total market value
Then,

$$
\begin{aligned}
\text{Expected intellectual property profit (EIPP)} = \{(\text{fixed} \\
\text{liabilities}) \times (\text{profit ratio a}) + (\text{total market value}) \times \\
(\text{profit ratio p})\} - \{(\text{financial assets}) \times (\text{profit ratio m}) + \\
(\text{tangible fixed assets}) \times (\text{profit ratio f})\} \ ...(\text{Formula 12})
\end{aligned}
$$

The expected intellectual property profit (EIPP) is the balance obtained by deducting the expected return sought from on-balance (on the balance sheet) assets from the expected return sought from the evaluation amount of the enterprise value in the market. This expected intellectual property profit can be considered to be the amount of profit expected by the market to be created by the respective enterprises with the off-balance intellectual properties (intangible assets not indicated in the balance sheet) as the source.

Therefore, in a market where this price is 0 or less, it is evident that the market is viewing an enterprise to have profitability less than the expected return to be obtained from the on-balance assets of such enterprise.

Further, when this amount is equal to or greater than the amount sought with the intellectual property profit (amount of profit obtained by deducting the interest of financial assets and interest of tangible fixed assets from the so-called total business profit in which royalty income of patents, and so on is added to the gross operating profit (GBP)), it is evident that the market is evaluating such enterprise to have intellectual properties which are valued equivalent to or in excess of its amount of investment as the result of the R&D investment (recorded as expenses) and so on.

In a balance sheet, (assets) = (liabilities) + (capital).
Further, since (assets) = (liquid assets) + (tangible assets) + (intangible assets), (intangible assets) = (assets) - {(liquid assets) + (tangible assets)}.
Therefore, by substituting (assets), (intangible assets) = {(liabilities) + (capital)} - {(liquid assets) + (tangible assets)}.
The expected intellectual property profit (EIPP) is an index that applies the above to create intangible assets.

In the present embodiment, the (profit ratio m) of financial assets can be substituted with the short-term prime rate. Further, the (profit ratio f) of tangible fixed assets can be substituted with the long-term prime rate. Moreover, the short-term prime rate was used as the profit ratio m, as described above, since financial assets are a relatively short-term repayment of debt, and the long-term prime rate was used as the profit ratio f since the repayment of such fixed assets will continue for a relatively long period of time.

The "expected enterprise value profit" shown in (Formula 11) is an expected return based on the enterprise value, and shows the total of the interest rate of the long-term debt and corporate bond and the interest rate (dividends) to be paid to stockholders.

Here, the "profit ratio a" of fixed liabilities is calculated from the weighted average of the after-tax interest rate of the long-term debt and corporate bond constituting the fixed liabilities. Specifically, the long-term prime rate is substituted as the interest rate of long-term debts, and the corporate bond rate is calculated by seeking the ratio of the corporate bond interest in relation to the corporate bond, and weighting them by the ratio of the long-term debt and corporate bond among the fixed liabilities to seek weighted average value. And {1-(corporate tax rate)} is multiplied with the weighted average value sought above. The calculating formula thereof is shown below (Formula 13).

```
Profit ratio a = [{(long-term prime rate) × (long-term debt) +

(corporate bond rate of interest) × (corporate bond)} /

{(long-term debt) + (corporate bond)}] × {(1-(corporate tax

rate)) ...(Formula 13)
```

The "profit ratio p" of the equity capital (= total market value) shown in (Formula 11) above is sought with the CAPM method.
CAPM is the abbreviation of "Capital Asset Pricing Model", also called as capital asset value model, and is one of the investment strategies to be used upon combining shares and safe assets (deposits and so on) upon conducting asset management. The calculating formula thereof is shown below (Formula 14).

```
Profit ratio p of equity capital = (risk-free rate) + (β

value) × {(market risk) - (risk-free rate)} ...(Formula 14)
```

A risk-free rate is the minimum interest rate to be guaranteed even when there is absolutely no risk, and a 10-year long-term government bond yield rate is used here. A market risk is a fluctuating risk (profit), and a 30-year simple average value of the return on stock (for instance, a value obtained by subtracting the average stock price of 30 years ago from the current average stock price).
The $\beta$ value is an index showing the difference upon comparison with the transition of the Nikkei Stock Average. The $\beta$ value is a numerical value representing the sensitivity of the enterprise in the stock market, and if this value exceeds 1, the price rise or price drop will become greater than the average transition of the stock market. Secure companies such as electrical power companies have a $\beta$ value that is close to 0, and high-risk, high-return enterprises such as IT venture companies have a high $\beta$ value.
As a general indication, when the stock price of a certain enterprise is compared with the transition of the Nikkei Stock Average, the value may be:

(1) 0.5 when there is no significant fluctuation;
(2) 1.0 if the fluctuation is roughly the same;
(3) 1.5 when there is significant fluctuation; or
(4) 2.0 when there is significant fluctuation and such fluctuation is fluid;

but there are cases where transition and fluctuation of stock prices of enterprises are sought and calculated extremely accurately.
Without limitation to the foregoing values, other values may be used as a risk-free rate or a market risk, and the $\beta$ value may be a free value that is not dependent on the foregoing calculation, and this may also be set forth with a value such as the rise and fall of interest rate or inflation rate.

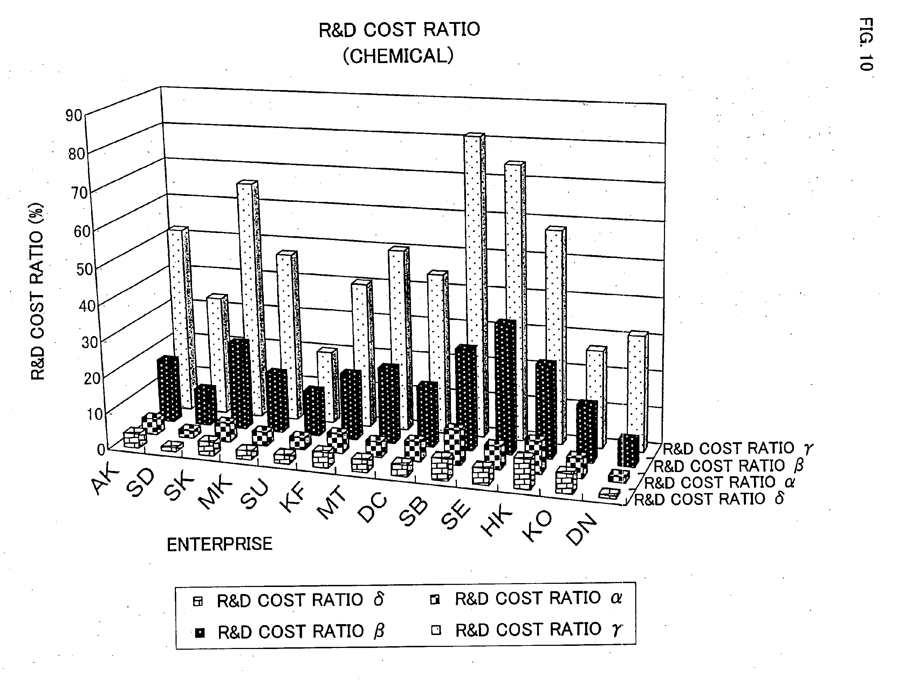

FIG. 10 shows a display example of the R&D cost ratio $\alpha$, $\beta$, $\gamma$ and $\delta$ calculated regarding the 13 companies in the chemical industry.
In the display example shown in FIG. 10, the respective indexes of the R&D cost ratio are disposed in the y axis in the order of R&D cost ratio $\delta$, $\alpha$, $\beta$ and $\gamma$ from the near side of FIG. 10. The name of each enterprise in which the index of R&D cost ratio was calculated is disposed on the x axis as abbreviations such as DN, KO and so on. The z axis is three-dimensionally displaying the values (%) of the respective R&D cost ratios $\delta$, $\alpha$, $\beta$ and $\gamma$. The reason why the disposition of the R&D cost ratio on the y axis is in the order of $\delta$, $\alpha$, $\beta$ and $\gamma$ is to place the indexes ($\delta$ and so on) of small values in the front so as prevent indexes of small values from being hidden, and to facilitate the visualization of the three-dimensional display.
When displaying FIG. 10, one or more indexes among the R&D cost ratio $\alpha$, R&D cost ratio $\beta$, R&D cost ratio $\gamma$ and R&D cost ratio $\delta$ is calculated with the R&D cost ratio calculation means of the information processing means 380 and the like regarding a plurality of enterprises. Then, display data for displaying, index by index and enterprise by enterprise, the calculated indexes of R&D cost ratio of the plurality of enterprises is generated with the display data generation means of the information processing means 380 and the like and is output to the display means or the like.

When comparing the fluctuation of the overall R&D cost ratios $\alpha$, $\beta$, $\gamma$ and $\delta$, the R&D cost ratios $\delta$, $\alpha$, $\beta$ and $\gamma$ are roughly showing the same fluctuation. Therefore, it can be said that the tendencies of indexes in which the R&D cost is divided by various items are mutually correlated.

Foremost, the R&D cost ratios $\delta$ calculated for the respective enterprises in the chemical industry are compared.

The R&D cost ratio $\delta$ is an index obtained by dividing the "R&D cost" by the "total assets". Company HK is the enterprise showing the highest value, with Company SB and Company KO following behind. Meanwhile, Company DN is the enterprise showing the lowest R&D cost ratio $\delta$, and Company SD shows the next lowest value.

As shown in FIG. 10, enterprises such as Company HK, Company SB and Company KO showing a high R&D cost ratio 5 are most likely enterprises strongly emphasizing on research and development in relation to their total assets. Contrarily, enterprises such as Company DN and Company SD can be judged as enterprises that are no emphasizing on research and development in spite of their total assets.

Next, the R&D cost ratios $\alpha$ calculated for the respective enterprises in the chemical industry are compared.

The R&D cost ratio $\alpha$ is an index obtained by dividing the "R&D cost" by the "sales volume". Company SB is showing the highest value, with Company HK following behind. Meanwhile, Company DN is showing the lowest R&D cost ratio $\alpha$.

As shown in FIG. 10, Company SB and Company HK showing a high R&D cost ratio $\alpha$ value can be considered to be enterprises emphasizing on research and development in relation to their sales volume. Contrarily, Company DN showing a low R&D cost ratio $\alpha$ value can be judged as an enterprise that is not emphasizing on research and development in spite of its sales volume.

Next, the R&D cost ratios $\beta$ calculated for the respective enterprises in the chemical industry are compared.

The R&D cost ratio $\beta$ is an index obtained by dividing the "R&D cost" by the "value added amount". Company SE is showing the highest value, with Company SB and Company HK following behind. Meanwhile, Company DN is showing the lowest R&D cost ratio $\beta$ value.

The "value added amount" disposed at the denominator of the R&D cost ratio $\beta$ is a value generated based on internal production factors (personnel, articles, money) among the sales volume, and, as shown in (Formula 3) above, the R&D cost is added thereto in the present invention. Therefore, the R&D cost ratio $\beta$ can be considered to be the ratio of the R&D cost among the value added amount.

According to FIG. 10, Company SE, Company SB, Company HK and so on showing a high R&D cost ratio $\beta$ value are investing roughly 20% to 30% among the value added amount in the R&D cost. Thereby, it is possible to judge that these enterprises are emphasizing on research and development. Meanwhile, it is possible to judge that Company DN showing a low R&D cost ratio $\beta$ value is not investing much of the value added amount generated based on the production factors in the research and development.

Next, the R&D cost ratios $\gamma$ calculated for the respective enterprises in the chemical industry are compared.

The R&D cost ratio $\gamma$ is an index obtained by dividing the "R&D cost" by the "gross operating profit (GBP)". Company SB is showing the highest value, with Company SE and Company SK following behind. Meanwhile, Company SU is showing the lowest R&D cost ratio $\gamma$ value. The gross operating profit (GBP), as shown in (Formula 5), is the sum of the operating profit and R&D cost, and, therefore, this index shows the ratio of the R&D cost among the gross operating profit (GBP). It is possible to deem that enterprises showing a high R&D cost ratio $\gamma$ value is generally emphasizing on research and development. Incidentally, it is necessary to keep in mind that enterprises showing a low operating profit may show a high R&D cost ratio $\gamma$ value.

As shown in FIG. 10, it is possible to comprehend in a glance that Company SB, Company SE, Company SK and so on are investing 65% or more among their business profits in research and development. It is possible to judge that these enterprises are attaching importance to research and development in anticipation of the future. Meanwhile, it is possible to judge that Company SU showing a low R&D cost ratio $\gamma$ value is attaching importance to the current profits rather than research and development.

As shown in FIG. 10, when representing the respective indexes of the R&D cost ratio, Company SB is showing the highest ratio in the overall indexes, with Company SE, Company HK and Company SK following behind. Thereby, it is possible to judge that each of these enterprises is emphasizing in research and development. Contrarily, Company SU is showing a low ratio in the overall indexes, and it is possible to judge that this enterprise is not laying much emphasis on research and development.

Further, as a result of comparing and observing the respective indexes of the R&D cost ratios $\alpha$, $\beta$, $\gamma$ and $\delta$ per enterprise, it is possible to know the attitude of each enterprise to research and development. Thus, when investing in stocks or the like of a specified enterprise, when jointly developing a product with a specified enterprise, or when wishing to be employed in a specified enterprise, it is possible to grasp the tendency or predict the potential per enterprise or technical field.

In FIG. 10, although the respective indexes of the R&D cost ratios $\alpha$, $\beta$, $\gamma$ and $\delta$ are represented in a bar graph, the present invention is not limited to a bar graph, and those indexes may also be represented in a different display format or chart format.

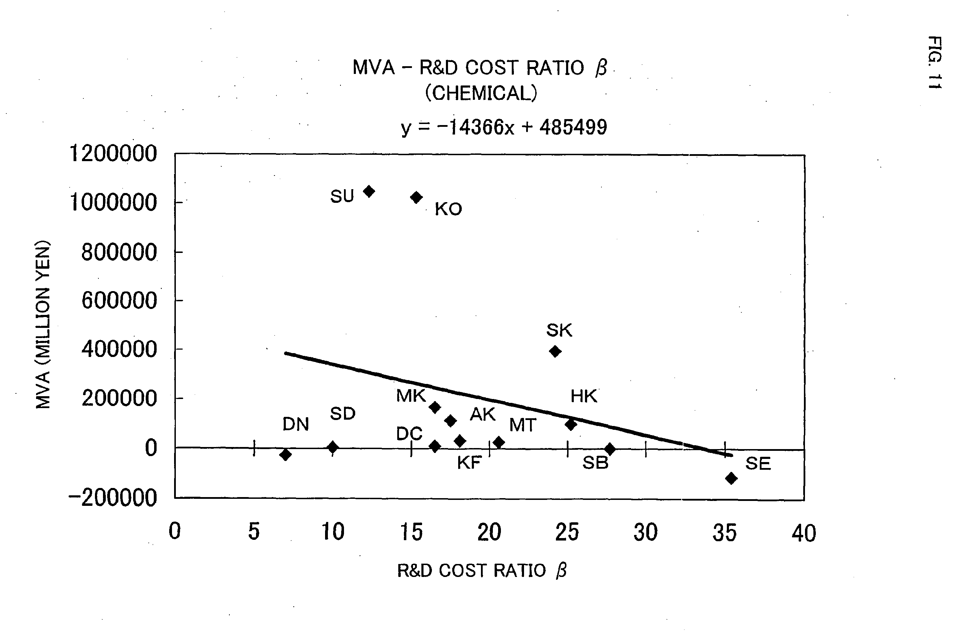

FIG. 11 is a diagram showing a display example of associating and displaying the R&D cost ratio β and market value added (MVA) calculated regarding the 13 companies in the chemical industry.

With the display example shown in FIG. 11, the R&D cost ratio β is plotted on the horizontal axis (x axis), and the market value added (MVA) is plotted on the vertical axis (y axis). Incidentally, in the vicinity of the plotted points, abbreviations such as KO and SK are provided in order to identify the plotted companies. The straight line shown in the graph is a regression line showing the average value of the respective plotted points, and the calculating formula thereof is represented at the upper part of the graph.

In the case displaying FIG. 11, the R&D cost ratio β is calculated with the R&D cost ratio calculation means of the information processing means 380 and the like. And, the display data for associating and displaying the R&D cost ratio and market value added as shown in FIG. 11 is generated with the display data generation means of the information processing means 380 and the like, and output to the display means or the like.

In FIG. 11, although the R&D cost ratio β and market value added (MVA) are associated and plotted, the present invention is not limited to a plotted display, and those indexes may also be represented in a different display format or chart format.

The R&D cost ratio β shows the ratio of "R&D cost" in relation to the "value added amount", arid, when viewing the regression line, the higher the R&D cost ratio β value is, the lower is the market value added (MVA) value.

Company KO, Company SU and Company SK are the 3 enterprises positioned above the average regression line, the remaining 10 companies are positioned below the average regression line, and the R&D cost ratio β values of most enterprises are calculated to be near 15 to 25. Further, values of the market value added (MVA) calculated regarding these enterprises are distributed between 0 and 200000 (million yen).

Among the above, with Company KO and Company SU, the R&D cost ratio β values are calculated as roughly 15 and 12, and extremely high values of the market value added (MVA) are shown in comparison to other enterprises. The market value added (MVA) value is considered to be high because the market is evaluating these enterprises as leveraging their R&D cost.

Contrarily, with Company SE, although the R&D cost ratio β value is calculated extremely high in excess of 35, the market value added (MVA) value is a negative figure. In the case of this Company SE, since the amount invested in the R&D cost among the value added amount is so great, it is anticipated that the market is judging this enterprise as lacking emphasis on profits, and, as a result, the evaluation of the market value added (MVA) was low.

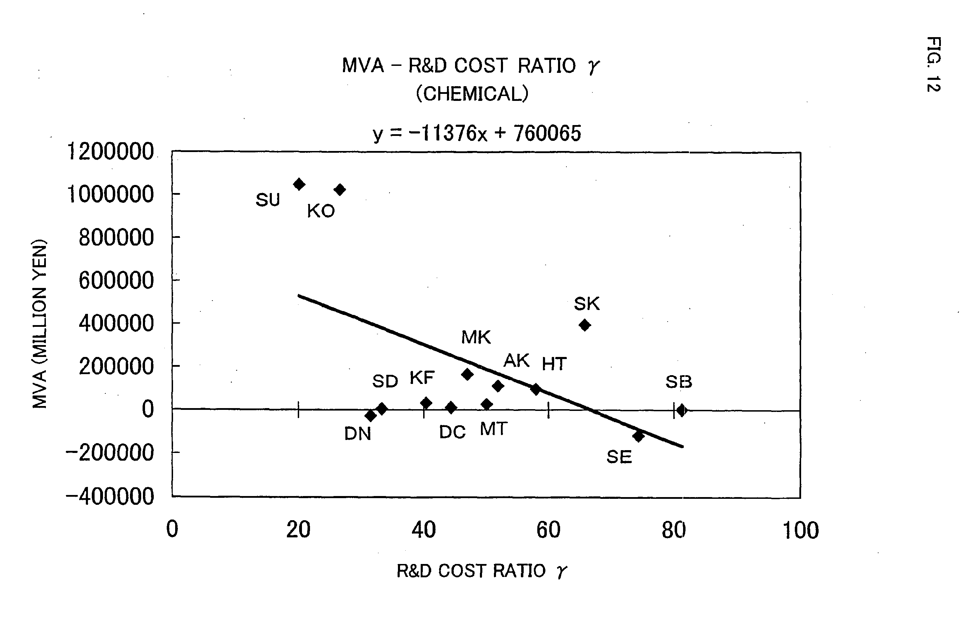

FIG. 12 is a diagram showing a display example of associating and displaying the R&D cost ratio γ and market value added (MVA) calculated regarding the 13 companies in the chemical industry.

With the display example shown in FIG. 12, the R&D cost ratio γ is plotted on the horizontal axis (x axis), and the market value added (MVA) is plotted on the vertical axis (y axis). Incidentally, in the vicinity of the plotted points, abbreviations such as KO and SK are provided in order to identify the plotted companies. The straight line shown in the graph is a regression line showing the average value of the respective plotted points, and the calculating formula thereof is represented at the upper part of the graph.

In the case displaying FIG. 12, the R&D cost ratio γ is calculated with the R&D cost ratio calculation means of the information processing means 380 and the like. And, the display data for associating and displaying the R&D cost ratio and market value added as shown in FIG. 12 is generated with the display data generation means of the information processing means 380 and the like, and output to the display means or the like.

In FIG. 12, although the R&D cost ratio γ and market value added (MVA) are associated and plotted, the present invention is not limited to a plotted display, and those indexes may also be represented in a different display format or chart format.

As shown in (Formula 4) above, the R&D cost ratio γ is an index showing the ratio of "R&D cost" in relation to the "gross operating profit (GBP)". As shown in FIG. 12, Company SK, Company KO, Company SU, Company HT and Company SB are the 5 enterprises positioned above the average regression line. The remaining 8 enterprises are positioned below the average regression line. Incidentally, Company SB positioned above the average regression line has a market value added (MVA) value near 0.

Among the above, Company SK shows an R&D cost ratio γ value near 65, yet shows a comparatively high market value added (MVA) value. Although the R&D cost ratio γ values calculated for Company KO and Company SU are roughly 20, the market value added (MVA) values are showing an extremely high number. The R&D cost ratio γ values of most enterprises are calculated to be between 30 and 50.

Company SB shown in FIG. 12 shows an R&D cost ratio γ value exceeding 80, and it is deemed that this enterprise is investing most of its gross operating profit (GBP) in research and development. Further, Company SE similarly shows an R&D cost ratio γ value of roughly 75, and it is assumed that this enterprise is investing most of its gross operating profit (GBP) in research and development, whereby the market value added (MVA) value is calculated as a negative number.

The regression line shown in FIG. 12 is sloping downward, and shows the larger the R&D cost ratio γ value is, the lower is the market value added (MVA) value. In other words, since the gross operating profit (GBP) = (operating profit) + (R&D cost), an enterprise showing a large R&D cost ratio γ value is most likely investing too much in research and development.

In the case of an enterprise emphasizing on research and development and showing a large R&D cost ratio γ value, since the market is judging that the enterprise is investing too much of its current profits in research and development, it is assumed that the market evaluation becomes low, and the market value added (MVA) value also becomes low.

Therefore, it can be assumed that an ideal enterprise would be companies such as Company KO and Company SU having a low R&D cost ratio γ value, but showing a high market value added (MVA) value.

When observing FIG. 10 to FIG. 12 together, it is evident that Company SB and Company SE both show high R&D cost ratios β and γ. Nevertheless, when considering the market value added (MVA) value together, it is possible to judge that the amount invested in research and development was too large.

Meanwhile, Company KO and Company SU are investing an appropriate amount in research and development, and it is possible to judge that these enterprises are evaluated highly by the market.

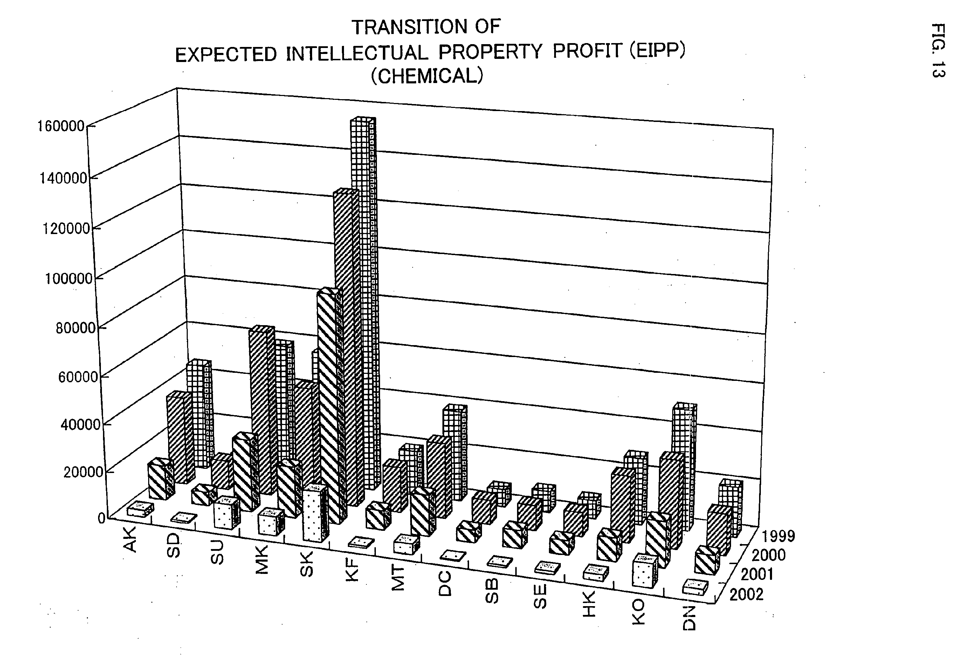

FIG. 13 is a diagram representing the transition (1999 to 2002) of the expected intellectual property profit (EIPP) regarding the 13 companies in the chemical industry.

With the display example shown in FIG. 13, the expected intellectual property profit (EIPP) value of each enterprise is plotted on the y axis for each year in order from 2002, 2001... from the near side of FIG. 13. Names of the respective enterprises in which the expected intellectual property profit (EIPP) index was calculated are abbreviated, represented and plotted on the x axis such as DN and KO. The calculated expected intellectual property profit (EIPP) value is represented in million yen units on the z axis.

When viewing the expected intellectual property profit (EIPP) value of the respective enterprises in 1999 shown in FIG. 13, it is evident that there is a significant difference in values among the respective enterprises. Nevertheless, when viewing 2002, it is evident that the difference is becoming smaller.

Further, overall, it is possible to read that the numerical value decreased significantly from 1999 to 2002. When taking note of the Company SK, in 1999, the expected intellectual property profit (EIPP) value outstripped the other enterprises and was calculated at a maximum value of around JPY150,000,000,000. This is evidence that the market is viewing this enterprise as having extremely large off-balance expected intellectual property profits that cannot be directly indicated on the balance sheet. Further, the fact that the stock price of Company SK at that time was high also contributed to the foregoing evaluation.

Company SU, Company MK and Company KO are the enterprises following behind Company SK in having the next highest expected intellectual property profit (EIPP) values. The expected intellectual property profit.(EIPP) values of these enterprises are roughly 1/3 of Company SK.

It is evident that these enterprises are being highly evaluated by the market as enterprises obtaining high intellectual property profits. Contrarily, Company DC and Company SE are enterprises showing low expected intellectual property profit (EIPP) values, and it is evident that the market is evaluating these enterprises as those that cannot be expected to yield intellectual property profits.

When observing the transition from 1999 to 2002, there are enterprises (Company SB, Company DC, Company SU and so on) that are showing a small rise in the amounts from 1999 to 2000, and the decline was not so severe. Nevertheless, every enterprise showed a decline of roughly 20% to 40% each year from 2000 onward, and when comparing the expected intellectual property profit (EIPP) values in 1999 and 2002, it is evident at a glance that this has declined to roughly 1/10.

From this, it is possible to read that the market is evaluating that all enterprises, and not just a specified enterprise, have no sense of expectancy of intellectual property profits.

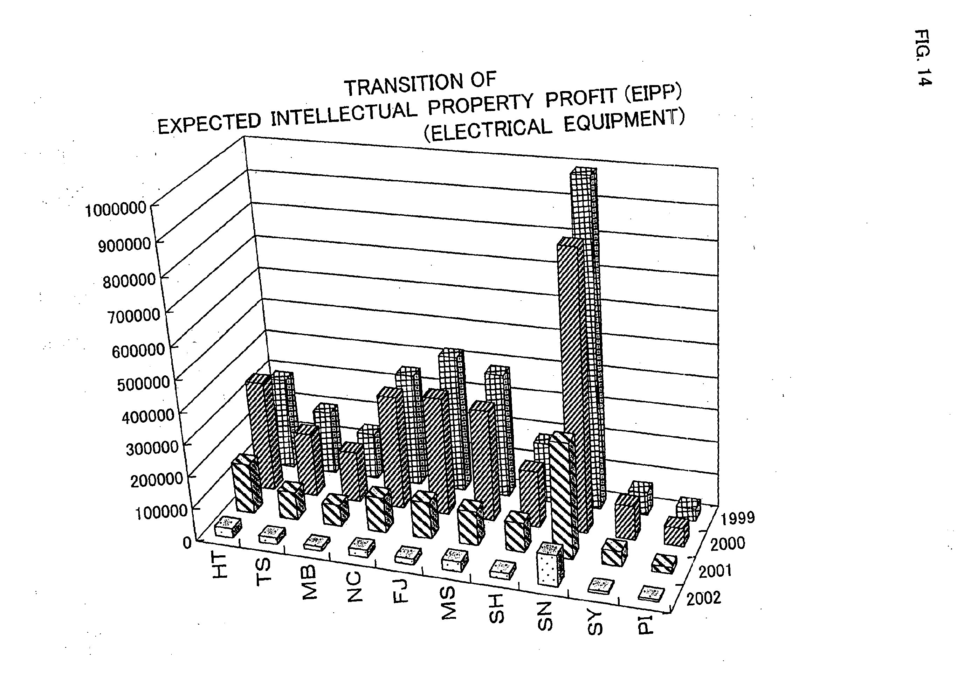

FIG. 14 is a diagram representing the transition (1999 to 2002) of the expected intellectual property profit (EIPP) regarding the 10 companies in the electrical equipment industry.

With the display example shown in FIG. 14, the expected intellectual property profit (EIPP) value of each enterprise is plotted on the y axis for each year in order from 2002, 2001... from the near side of FIG. 14. Names of the respective enterprises in which the expected intellectual property profit (EIPP) index was calculated are abbreviated, represented and plotted on the x axis such as PI and SY. The calculated expected intellectual property profit (EIPP) value is represented in million yen units on the z axis.

Even in the electrical equipment industry, when viewing 1999, Company SN is showing a high expected intellectual property profit (EIPP) value at roughly JPY1,000,000,000,000. Company FJ, Company MS and Company NC follow behind Company SN in which their expected intellectual property profit (EIPP) values are calculated at roughly 1/3 of Company SN.

According to FIG. 14, it is evident that the market is evaluating these enterprises as having high intellectual property profits. Further, the fact that the stock price of Company SN at that time was high also contributed to the calculation of the expected intellectual property profit (EIPP) value being high.

Contrarily, Company PI and Company SY are enterprises in which the expected intellectual property profit (EIPP) value is calculated small, and it is evident that the market is evaluating that it is difficult to expect intellectual property profits from these enterprises.

In the electrical equipment industry as well, there are enterprises (Company HT, Company SY, Company PI and so on) that show increasing values of expected intellectual property profit (EIPP) from 1999 to 2000, and although there are some enterprises that are showing a fall, the decline was not so severe.

Nevertheless, the expected intellectual property profit (EIPP) value declined roughly 30% to 50% each year from 2000 to 2002, and when comparing the expected intellectual property profit (EIPP) values in 1999 and 2002, it is evident that this has declined to roughly 1/10 to 1/15.

From this, it is possible to read that the market is evaluating that all enterprises, and not the respective enterprises, are showing a decline. Nevertheless, when taking note of 2002, the difference of the expected intellectual property profit (EIPP) values among enterprises is becoming small. This means that the market is evaluating that there is hardly any difference in the intellectual property profits of the respective enterprises.

When comparing the values of the expected intellectual property profit (EIPP) in the chemical industry shown in FIG. 13 and the electrical equipment industry shown in FIG. 14, it is evident that the amounts in the electrical equipment industry are calculated at one greater digit.

From 1999 to 2000, it is evident that both the electrical equipment industry and chemical industry hardly rose or fell, and show a similar tendency. According to the present invention, it is possible to compare the market evaluation across industries, and the different or same trends across industries can be read.

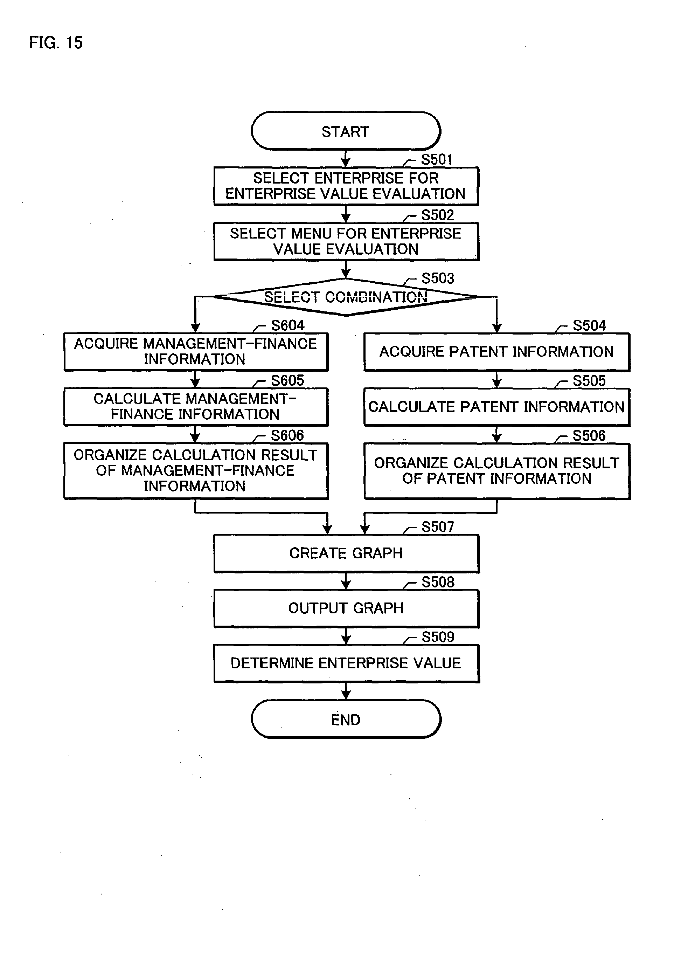

FIG. 15 shows a flowchart of calculating and outputting the respective indexes of R&D cost ratio, number of inventors, inventor ratio, R&D cost per inventor, market value added, price book value ratio, or expected intellectual property profit.

At S501 "select enterprise for enterprise value evaluation", the information processing means 380 receives the input of a display command of a screen for selecting an enterprise from a user via the input means 370 such as a keyboard and the bus 399. The information processing means 380 reads the display data upon selecting the enterprise from the recording means 384 based on such command, converts this into a display image data, and outputs such data to the display interface 373. The display interface 373 that acquired the display data from the information processing means 380 converts the display data to an image signal corresponding to the display means 372 and outputs the signal. The display means 372 displays a screen based on the display image signal input from the display interface 373 and notifies the user.

The user, while viewing the enterprise selection screen displayed on the display means 372, inputs the information for specifying one or more enterprises to be researched via the input means 370. Here, the information to be input may be the enterprise name, enterprise code, or an enterprise may be selected from the enterprise selection screen. Information for specifying the enterprise input by the user via the input means 370 is read by the information processing means 380 via the bus 399.

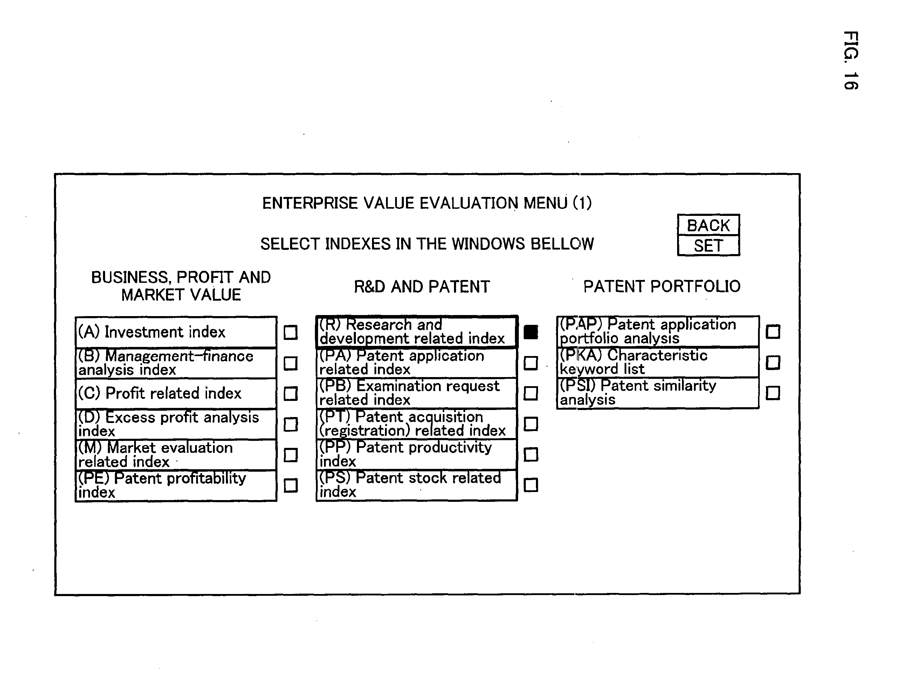

When the information processing means 380 receives the input of enterprise specifying information, the information processing means 380 reads the display data of the display menu for selecting the type of index to evaluate the enterprise value from the recording means 384, and, for example, displays the enterprise value evaluation menu as shown in FIG. 16 on the display means 372.

Next, at S502 "select menu for enterprise value evaluation", the user, while viewing the enterprise value evaluation menu displayed on the display means 372, selects the desired index for evaluating the enterprise value and inputs such index.

When selecting an index from the enterprise value evaluation menu shown in FIG. 16, the user selects a desired index from the selection menu of "business, profit, and market value" or "R&D, patent", or "patent portfolio". In the example shown in FIG. 16, the user is selecting the item of "(R) research and development index" belonging to the field of "R&D, patent".

When the user inputs information for selecting the index of "(R) research and development index", such input information is conveyed to the information processing means 380. The information processing means 380 outputs the command for displaying a selection mark at the portion of the index selected by the user to the display interface 373, and outputs information for displaying the respective indexes existing at a lower level in the form of a pulldown menu to the display interface 373. Incidentally, in the example shown in FIG. 16, the mark of the selected item is changed from a white square to a black square.

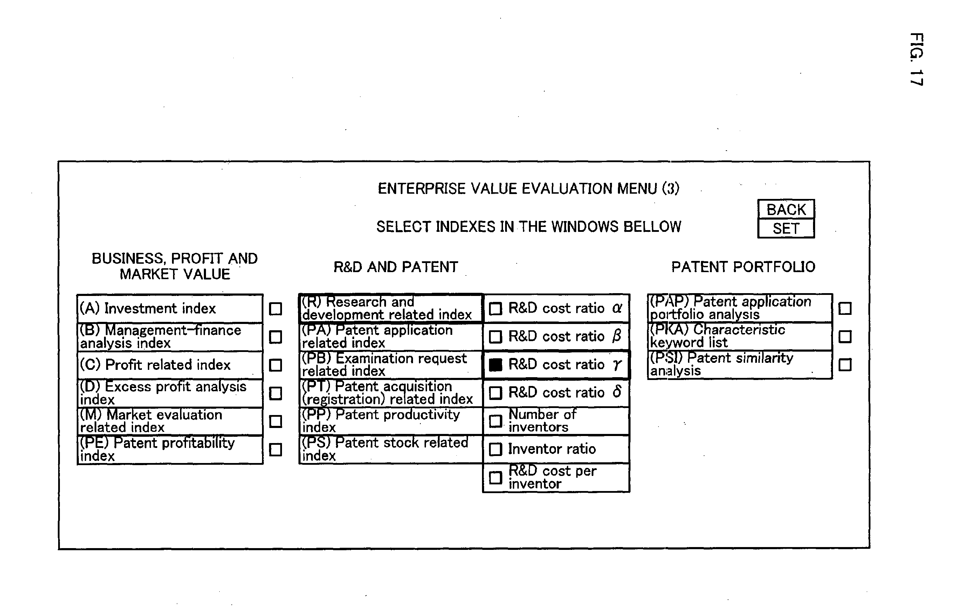

FIG. 17 shows a display example displaying the respective indexes existing in a lower level of "(R) research and development index" in the form a pulldown menu.

The user selects a desired index to be calculated from the respective indexes displayed on the display means 372. With the example illustrated in FIG. 17, the user is selecting the index of "R&D cost ratio $\gamma$".

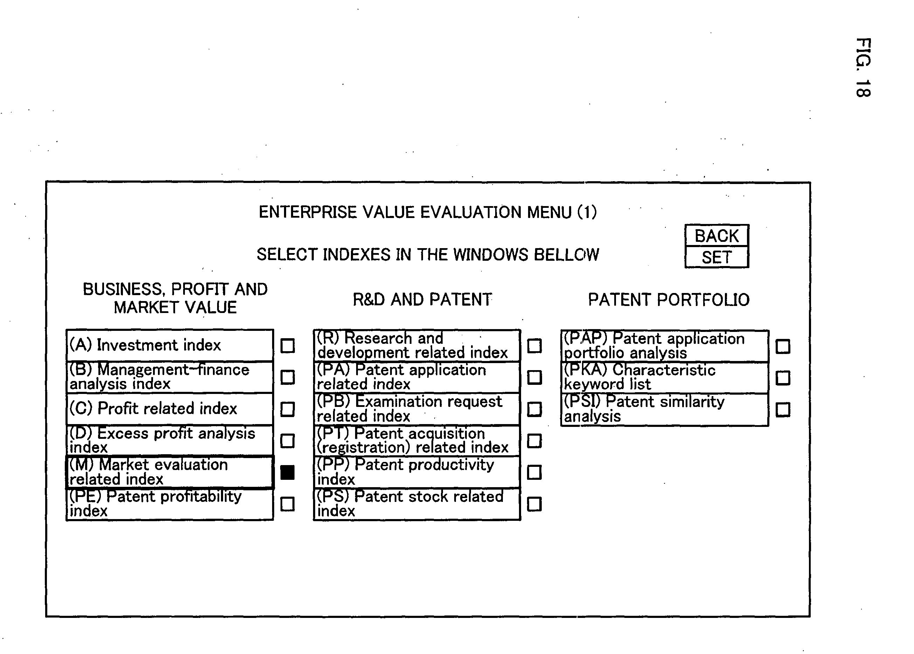

Further, when the user wishes to conduct a research by mutually associating the "R&D patent index" and "business, profit, and market value index", as shown in FIG. 18, the user will select "(M) market value related index" from the pulldown menu.

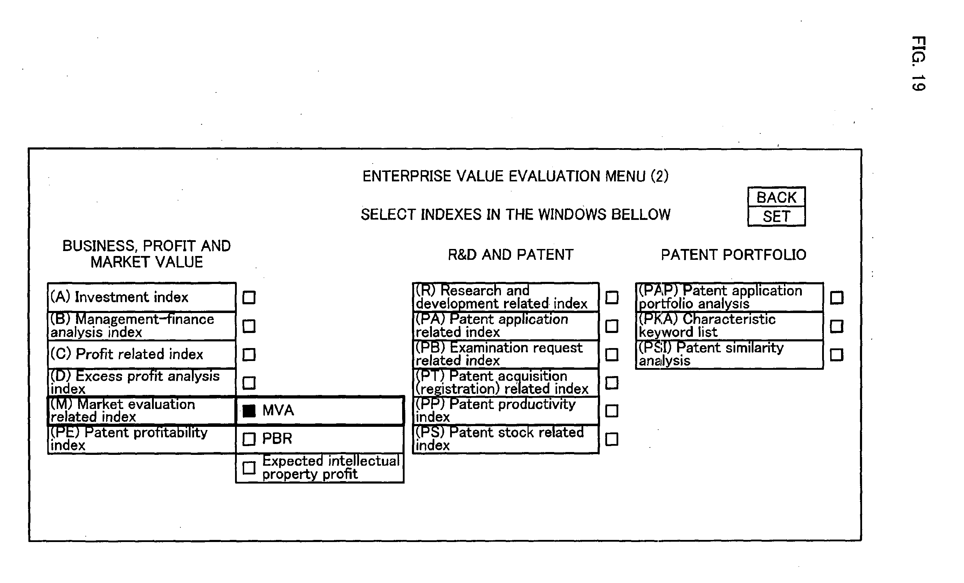

When the user inputs information for selecting the "(M) market value related index", the information processing means 380 that acquired such input information outputs a command for displaying a selection mark at the portion of the index selected by the user to the display interface 373, and, outputs information for displaying the respective indexes belonging to a lower level of the "(M) market value related index" as shown in FIG. 19 to the display interface 373 in the form of a pulldown menu.

The user inputs information for selecting the index of "MVA" from the pulldown menu displayed as shown in FIG. 19. Then, this input information is conveyed to the information processing means 380. The information processing means 380 sets a flag for deciding the parameter of the index to be calculated, displays a selection mark at the portion of the index selected by the user, and notifies the user of the set information.

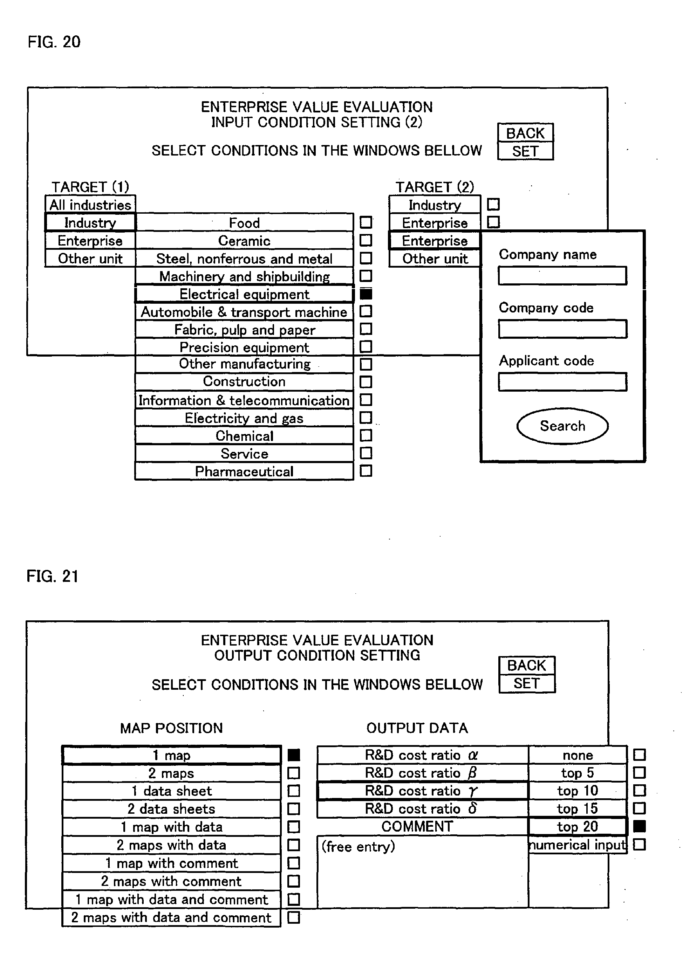

When the user selects the "set" button and the selection processing of the type of index for evaluating the enterprise value is ended, the information processing means 380 outputs a command for displaying the enterprise value evaluation input condition setting screen shown in FIG. 20 on the display means 372.

The user, while viewing the enterprise value evaluation input condition setting screen displayed on the display means 372, selects a desired enterprise to be evaluated. In the example shown in FIG. 20, the user is selecting "electrical equipment industry" among the "industries" to become the large classification among the targets of enterprise evaluation.

Further, the user may also select "enterprise" as the detailed classification of individual enterprises among the targets of enterprise value evaluation, and designate input conditions such as the "enterprise name", "enterprise code", "applicant code" and so on. When the user is to designate individual enterprises, the user selects the "enterprise" on the right side of FIG. 20, and inputs the enterprise name, enterprise code or applicant code.

When the user selects the "set" button and ends the input condition setting of the enterprise value evaluation, such input information is conveyed to the information processing means 380. The information processing means 380 sets a flag of the enterprise to become the "target" input by the user, displays a selection mark at the portion of the index selected by the user, displays information such as the set enterprise name, enterprise code and applicant code on the display means 372, and notifies the user of the set information.

When the user selects the "set" button and the setting of the input conditions of the enterprise value evaluation is ended, the information processing means 380 subsequently reads the display data of the enterprise value evaluation output condition setting screen shown in FIG. 21 from the recording means 384, and outputs a command for displaying this on the display means 372 via the display interface 373.

The user, while viewing the enterprise value evaluation output condition setting screen displayed on the display means 372, selects a desired display mode. In the example shown in FIG. 21, "single map" is selected as the information relating to the "map position", the "R&D cost ratio $\gamma$" is selected as the "output data", and "upper 20" is selected as the volume of information to be output and displayed.

When the user selects the "set" button and the setting of the enterprise value evaluation output conditions is ended, processing to be performed by the information processing means 380 proceeds to the processing of S503 "select combination" shown in FIG. 15.

When the user designates the implementation of operation relating to management-finance information such as "business, profit, and market value", the processing to be performed by the information processing means 380 proceeds to the processing of S604 "acquire management-finance information" shown in FIG. 15, and, when the user designates the implementation of operation of "R&D patent" or "patent portfolio", the processing to be performed by the information processing means 380 proceeds to the processing of S504 "acquire patent information" shown in FIG. 15.

Incidentally, when the user only designates an independent operation of the "R&D cost ratio" or the like, the information processing means 380 does not select the combination processing and implements only the processing of S604 onward.

For example, when the user designates the operation of the "R&D cost ratio $\gamma$" from the selection menu of "R&D, patent", at S604, the information processing means 380 performs processing for acquiring information required for calculating the indexes such as the R&D cost, sales volume, value added amount, gross operating profit and total assets of the respective enterprises from the database 20 based on the operation processing of the "R&D, patent" and information relating to the designated enterprise. After the acquisition processing of management-finance information is ended, the processing to be performed by the information processing means 380 proceeds to the processing of subsequent S605 "calculate management-finance information".

At S605, the information processing means 380 performs processing for calculating the desired index of the user based on the management-finance information acquired at S604, type of index of the "R&D, patent" designated by the user, and the calculating formula corresponding to the flag which has been set based on the enterprise name or the like to be operated.

When the operation processing of the index relating to management-finance information is ended at S605, the processing to be subsequently performed by the information processing means 380 proceeds to the processing of S606 "organize calculation result of management-finance information".

At S606, the information processing means 380 classifies the specified enterprise into a predetermined category based on the operation result of the index, and further performs operation processing for predetermined ranking or discrimination, and then organizes the various operation results. Incidentally, depending on the type of index to be calculated, there are certain indexes that do not require classification or ranking.

When the organization of the various operation results is ended at S606, the processing to be performed by the information processing means 380 proceeds to the subsequent processing of S507 "create graph".

Meanwhile, in a case where the user selects "(PA) patent application related index" from the "R&D, patent" (refer to FIG. 16), and further selects "number of patent applications", and desires the combination of the operation of "R&D, patent" and other items such as the "management-finance information", the processing to be performed by the information processing means 380 proceeds to S504 "acquire patent information".

At S504, the information processing means 380 acquires various types of information from the database 20 such as the patent information relating to applications, and operates the patent related index at the subsequent S505 "calculate patent information".

When the operation processing of patent information is ended at S505, the processing to the subsequently performed by the information processing means 380 will proceed to S506 "organize calculation result of patent information", and, as necessary, classifies the specified enterprise into a predetermined category, further performs operation processing for predetermined ranking or discrimination based on the operation result of the index relating to patents, and organizes the various operation results, and then the routine proceeds to the subsequent S507.

At S507, the information processing means 380 creates a chart or graph by applying the operation result of the patent information calculated at 5505, various operation results organized at S506, operation result of the management-finance information operated at S605, or operation result of the various types of managemerit-finance information organized at S606 into a display format according to the index or the operation result thereof, and coverts this into display data.

Next, at S508 "output graph", the information processing means 380 outputs the display data of the chart or graph created at S507 to the display interface 373, and displays this on the display means 372.

By the user perusing the chart or graph displayed at S508, the user will be able to easily know the enterprise value based on the market value in relation to the R&D cost made by the respective enterprises, diversification of inventions in the respective enterprises, competitive position relating to inventions, validity of the enterprise value and so on.

Depending on the items of enterprise evaluation designated by the user, there may be cases where the information processing means 380 performs a more detailed ranking in order to judge the enterprise value. In such a case, the information processing means 380 will read the predetermined threshold or the like at S509 "determine enterprise value" to judge the enterprise value, thereafter output the numerical value or graph thereof, and then end the calculation processing of the various indexes.

INDUSTRIAL APPLICABILITY

According to the enterprise evaluation device and enterprise evaluation program of the present invention, it is possible to quantitatively and qualitatively incorporate the value of intangible assets and evaluate the validity of the enterprise value.
Further, according to the enterprise evaluation device and enterprise evaluation program of the present invention, it is possible to know the tendency and predict the potential per enterprise or technical field when investing in stocks or the like of a specified enterprise, when jointly developing a product with a specified enterprise, or when wishing to be employed in a specified enterprise.

The present invention comprises: management-finance information acquisition means for acquiring R&D cost and gross operating profit from a management-finance database; R&D cost ratio calculation means for calculating R&D cost ratio by dividing the R&D cost by the gross operating profit; output means for outputting the R&D cost ratio to display means or the like, and thus it is possible to calculate and display the R&D cost ratio, and know to what degree a specified enterprise distributed its research and development activities among the business profits obtained from manufacture and sale activities. An enterprise showing a high value of this R&D cost ratio has small operating profits and is making large R&D costs, and, therefore, can be judged as having a high R&D investment tendency.
Further, an enterprise showing this R&D cost ratio near 0 has large operating profits and is making small R&D costs, and, therefore, can be judged as being an enterprise having a tendency of securing profits of its current business rather than R&D investment.
Incidentally, from the nature of the index, there may be cases where this ratio is swollenly calculated since the operating profit significantly decreased due to one reason or another. In this case, since this does not mean that the R&D investment tendency is particularly high, it is necessary to eliminate this upon observing the index. Further, if the operating profit is 0 or less, the R&D cost ratio will be a meaningless value, and thus the R&D cost ratio does not have to be calculated in this case.

Further, according to the present invention, the operating profit and R&D cost are acquired as a substitute for the gross operating profit, the operating profit and R&D cost are added to calculate the gross operating profit, and the R&D cost ratio is calculated by dividing the acquired R&D cost by the calculated gross operating profit. Therefore, it is possible to calculate the R&D cost ratio from the operating profit and R&D cost.

Further, according to the present invention, the sales profit, R&D cost included in the manufacturing cost, administrative expenses, and R&D cost included in the administrative expenses are acquired as a substitute for the gross operating profit, the gross operating profit is calculated by subtracting the administrative expenses from the amount obtained by adding the sales profit and R&D cost included in the manufacturing cost and R&D cost included in the administrative expenses, and the R&D cost ratio is calculated by dividing the acquired R&D cost by the calculated gross operating profit. Therefore, it is possible to calculate the R&D cost ratio from the sales profit and R&D cost included in the manufacturing cost-and R&D cost included in the administrative expenses.

Further, the present invention comprises: management-finance information acquisition means for acquiring R&D cost and total assets from a management-finance database; R&D cost ratio calculation means for calculating R&D cost ratio through dividing the R&D cost by the total assets; output means for outputting the R&D cost ratio to display means, printing means or the like. Therefore, it is possible to calculate and notify the size of R&D cost viewed from the size of assets (stock). Although the amount to be invested in the R&D cost is influenced to a certain degree based on the size of capital and assets of the enterprise, it is possible to make a comparison with other enterprises, regardless of the size of enterprise, by dividing the R&D cost by the total assets.

Further, the present invention comprises: management-finance information acquisition means for acquiring R&D cost, as well as sales volume, value added amount, gross operating profit or total assets from a management-finance database; R&D cost ratio calculation means for calculating index of R&D cost ratio $\alpha$ obtained by dividing the R&D cost by the sales volume, index of R&D cost ratio $\beta$ obtained by dividing the R&D cost by the value added amount, index of R&D cost ratio $\gamma$ by dividing the R&D cost by the gross operating profit, or index of R&D cost ratio $\delta$ obtained by dividing the R&D cost by the total assets for a plurality of enterprises; display data generation means for generating display data for displaying, index by index and enterprise by enterprise, the index of R&D cost ratio of said plurality of enterprises; and output means for outputting the display data to display means or the like. Therefore, it is possible to facilitate the visualization of the respective indexes of the R&D cost ratios $\alpha$, $\beta$, $\gamma$ and $\delta$ per enterprise.

As a result of observing the displayed drawings, it is possible to judge whether an enterprise is laying emphasis on research and development in anticipation of the future, or to judge whether an enterprise is laying emphasis of current profits rather than research and development.

Further, as a result of comparing and observing the respective indexes of the R&D cost ratios $\alpha$, $\beta$, $\gamma$ and $\delta$, it is possible to know the attitude of each enterprise to research and development.

Further, the present invention comprises: management-finance information acquisition means for acquiring R&D cost, value added amount and market value added from a management-finance database; R&D cost ratio calculation means for calculating R&D cost ratio by dividing the R&D cost by the value added amount; display data generation means for generating display data for associating and displaying the R&D cost ratio and the market value added; and output means for outputting said display data to display means or the like. Therefore, it is possible to associate and display the R&D cost ratio and market value added, and it is also possible to grasp the relationship between the market's evaluation that the R&D cost is being leveraged and the popularity of the specified enterprise. Moreover, it is also possible to grasp the relationship between the market's evaluation that an enterprise is not laying much emphasis on profits and is investing too much in the R&D cost among the value added amount, and the popularity of the specified enterprise.

Further, the present invention comprises: management-finance information acquisition means for acquiring R&D cost, gross operating profit and market value added from a management-finance database; R&D cost ratio calculation means for calculating R&D cost ratio by dividing the R&D cost by the gross operating profit; display data generation means for generating display data for associating and displaying the R&D cost ratio and the market value added; and output means for outputting said display data to display means or the like. Therefore, it is possible to associate and display the R&D cost ratio and market value added, and it is thereby possible to understand the market's evaluation to an enterprise laying emphasis on research and development. Moreover, it is possible to know whether the enterprise to be researched is receiving high evaluation from the market even though it has a low R&D cost ratio.

Further, according to the present invention, it is possible to calculate and output the index for judging the attitude of a specified enterprise to research and development based on the size of investment made in the research and development activities.

Further, the present invention comprising: management-finance information acquisition means for acquiring expected enterprise value profit, financial assets, return on financial assets, tangible fixed assets and return on tangible fixed assets from a management-finance database; expected intellectual property profit calculation means for calculating expected intellectual property profit by subtracting, from the expected enterprise value profit, a value obtained by adding a value obtained by multiplying the financial assets with the return on financial assets and a value obtained by multiplying the tangible fixed assets with the return on tangible assets; and output means for outputting said calculated expected intellectual property profit to display means or the like. Therefore, the present invention calculates the balance obtained by deducting the expected return sought from on-balance (on the balance sheet) assets from the expected return sought from the evaluation amount of the enterprise value in the market, namely, the amount of profit expected by the market to be created by the respective enterprises with the off-balance intellectual properties (intangible assets not indicated in the balance sheet) as the source. If the expected intellectual property profit amount is 0 or less, it is possible to know that the market is viewing an enterprise to have profitability that is less than the expected return to be obtained from on-balance assets.

Further, when the expected intellectual property profit amount is equal to or greater than the amount sought with the intellectual property profit (amount of profit obtained by deducting the interest of financial assets and interest of tangible fixed assets from the so-called total business profit in which royalty income of patents and so on is added to the gross operating profit (GBP)), it is possible to know that the market is evaluating such enterprise to have intellectual properties in excess of its amount of investment as the result of the R&D investment (recorded as expenses) and so on.

## Claims

1. An enterprise evaluation device, comprising:

   management-finance information acquisition means for acquiring R&D cost in a first specified period and gross operating profit in a second specified period of a specified enterprise from a management-finance database containing management-finance information of enterprises;
   R&D cost ratio calculation means for calculating R&D cost ratio through dividing said acquired R&D cost by the gross operating profit; and
   output means for outputting said calculated R&D cost ratio to display means, printing means, recording medium, or another telecommunications device via a communication line.

2. An enterprise evaluation device, comprising:

   management-finance information acquisition means for acquiring R&D cost in a first specified period and operating profit and R&D cost in a second specified period of a specified enterprise from a management-finance database containing management-finance information of enterprises;
   R&D cost ratio calculation means for calculating gross operating profit by adding said acquired operating profit and the R&D cost in the second specified period, and calculating R&D cost ratio by dividing said acquired R&D cost by the gross operating profit; and
   output means for outputting said calculated R&D cost ratio to display means, printing means, recording medium, or another telecommunications device via a communication line.

3. An enterprise evaluation device, comprising:

   management-finance information acquisition means for acquiring R&D cost in a first specified period, and acquiring sales profit, R&D cost included in manufacturing cost, administrative expenses and R&D cost included in the administrative expenses in a second specified period, of a specified enterprise, from a management-finance database containing management-finance information of enterprises;
   R&D cost ratio calculation means for calculating gross operating profit by subtracting the administrative expenses from a value obtained by adding said acquired sales profit, the R&D cost included in the manufacturing cost and the R&D cost included in the administrative expenses in the second specified period, and calculating R&D cost ratio through dividing said acquired R&D cost by said calculated gross operating profit; and
   output means for outputting said calculated R&D cost ratio to display means, printing means, recording medium, or another telecommunications device via a communication line.

4. An enterprise evaluation device, comprising:

   management-finance information acquisition means for acquiring R&D cost in a first specified period, and total assets in a second specified period of a specified enterprise from a management-finance database containing management-finance information of enterprises;
   R&D cost ratio calculation means for calculating R&D cost ratio through dividing said acquired R&D cost by the total assets; and

output means for outputting said calculated R&D cost ratio to display means, printing means, recording medium, or another telecommunications device via a communication line.

5. An enterprise evaluation device, comprising:

management-finance information acquisition means for acquiring R&D cost in a first specified period and sales volume, value added amount, gross operating profit or total assets in a second specified period of a specified enterprise from a management-finance database containing management-finance information of enterprises;
R&D cost ratio calculation means for calculating index of R&D cost ratio $\alpha$ obtained by dividing said acquired R&D cost by the sales volume, index of R&D cost ratio $\beta$ obtained by dividing said acquired R&D cost by the value added amount, index of R&D cost ratio $\gamma$ by dividing said acquired R&D cost by the gross operating profit, or index of R&D cost ratio $\delta$ obtained by dividing said acquired R&D cost by the total assets for a plurality of enterprises;
display data generation means for generating display data for displaying, index by index and enterprise by enterprise, the calculated index of R&D cost ratio of said plurality of enterprises; and
output means for outputting said display data to display means, printing means, recording medium, or another telecommunications device via a communication line.

6. An enterprise evaluation device, comprising:

management-finance information acquisition means for acquiring R&D cost in a first specified period and value added amount and market value added in a second specified period of a specified enterprise from a management-finance database containing management-finance information of enterprises;
R&D cost ratio calculation means for calculating R&D cost ratio by dividing said acquired R&D cost by the value added amount;
display data generation means for generating display data for associating and displaying said calculated R&D cost ratio and said acquired market value added; and
output means for outputting said display data to display means, printing means, recording medium, or another telecommunications device via a communication line.

7. An enterprise evaluation device, comprising:

management-finance information acquisition means for acquiring R&D cost in a first specified period and gross operating profit and market value added in a second specified period of a specified enterprise from a management-finance database containing management-finance information of enterprises;
R&D cost ratio calculation means for calculating R&D cost ratio by dividing said acquired R&D cost by the gross operating profit;
display data generation means for generating display data for associating and displaying said calculated R&D cost ratio and said acquired market value added; and
output means for outputting said display data to display means, printing means, recording medium, or another telecommunications device via a communication line.

8. An enterprise evaluation device, comprising:

management-finance information acquisition means for acquiring expected enterprise value profit, financial assets, return on financial assets, tangible fixed assets and return on tangible fixed assets of a specified enterprise from a management-finance database containing management-finance information of enterprises;
expected intellectual property profit calculation means for calculating expected intellectual property profit by subtracting, from the expected enterprise value profit, a value obtained by adding a value obtained by multiplying said acquired financial assets with the return on financial assets and a value obtained by multiplying the tangible fixed assets with the return on tangible assets; and
output means for outputting said calculated expected intellectual property profit to display means, printing means, recording medium, or another telecommunications device via a communication line.

9. An enterprise evaluation device, comprising:

management-finance information acquisition means for acquiring fixed liabilities, return on fixed liabilities, total market value, return on total market value, financial assets, return on financial assets, tangible fixed assets and return on tangible fixed assets of a specified enterprise from a management-finance database containing management-finance information of enterprises;

expected intellectual property profit calculation means for calculating expected intellectual property profit by subtracting a value, obtained by multiplying the financial assets with the return on financial assets and a value obtained by multiplying the tangible fixed assets with the return on tangible assets, from a value obtained by adding a value obtained by multiplying said acquired fixed liabilities with the return on fixed liabilities and a value obtained by multiplying the total market value with the return on total market value; and

output means for outputting said calculated expected intellectual property profit to display means, printing means, recording medium, or another telecommunications device via a communication line.

10. An enterprise evaluation program to be executed by information processing means of an enterprise evaluation device comprising: management-finance information acquisition means for acquiring management-finance information of an enterprise from a management-finance database; R&D cost ratio calculation means for calculating R&D cost ratio; output means for outputting the R&D cost ratio to display means or the like; and information processing means capable of controlling said management-finance information acquisition means, R&D cost ratio calculation means and output means,

wherein said information processing means realizes:

a function for causing said management-finance information acquisition means to acquire R&D cost in a first specified period and gross operating profit in a second specified period of a specified enterprise from the management-finance database containing management-finance information of enterprises;

a function for causing said R&D cost ratio calculation means to calculate the R&D cost ratio by dividing said acquired R&D cost by the gross operating profit; and

a function for causing said output means to output said calculated R&D cost ratio to display means, printing means, recording medium, or another telecommunications device via a communication line.

11. An enterprise evaluation program to be executed by information processing means of an enterprise evaluation device comprising: management-finance information acquisition means for acquiring management-finance information of an enterprise from a management-finance database; R&D cost ratio calculation means for calculating R&D cost ratio; output means for outputting the R&D cost ratio to display means or the like; and information processing means capable of controlling said management-finance information acquisition means, R&D cost ratio calculation means and output means,

wherein said information processing means realizes:

a function for causing said management-finance information acquisition means to acquire R&D cost in a first specified period and operating profit and R&D cost in a second specified period of a specified enterprise from the management-finance database containing management-finance information of enterprises;

a function for causing said R&D cost ratio calculation means to calculate gross operating profit by adding said acquired operating profit and the R&D cost in the second specified period, and calculate the R&D cost ratio by dividing said acquired R&D cost by the gross operating profit; and

a function for causing said output means to output said calculated R&D cost ratio to display means, printing means, recording medium, or another telecommunications device via a communication line.

12. An enterprise evaluation program to be executed by information processing means of an enterprise evaluation device comprising: management-finance information acquisition means for acquiring management-finance information of an enterprise from a management-finance database; R&D cost ratio calculation means for calculating R&D cost ratio; output means for outputting the R&D cost ratio to display means or the like; and information processing means capable of controlling said management-finance information acquisition means, R&D cost ratio calculation means and output means,

wherein said information processing means realizes:

a function for causing said management-finance information acquisition means to acquire R&D cost in a first specified period, and acquire sales profit, R&D cost included in manufacturing cost, administrative expenses and R&D cost included in the administrative expenses in a second specified period, of a specified enterprise, from the management-finance database containing management-finance information of enterprises;

a function for causing said R&D cost ratio calculation means to calculate gross operating profit by subtracting the administrative expenses from a value obtained by adding said acquired sales profit, the R&D cost included in the manufacturing cost and the R&D cost included in the administrative expenses in the second specified period, and calculate the R&D cost ratio through dividing said acquired R&D cost by said calculated gross operating profit; and

a function for causing said output means to output said calculated R&D cost ratio to display means, printing means, recording medium, or another telecommunications device via a communication line.

13. An enterprise evaluation program to be executed by information processing means of an enterprise evaluation device comprising: management-finance information acquisition means for acquiring management-finance information of an enterprise from a management-finance database; R&D cost ratio calculation means for calculating R&D cost ratio; output means for outputting the R&D cost ratio to display means or the like; and information processing means capable of controlling said management-finance information acquisition means, R&D cost ratio calculation means and output means,
wherein said information processing means realizes:

a function for causing said management-finance information acquisition means to acquire R&D cost in a first specified period, and total assets in a second specified period of a specified enterprise from the management-finance database containing management-finance information of enterprises;
a function for causing said R&D cost ratio calculation means to calculate the R&D cost ratio through dividing said acquired R&D cost by the total assets; and
a function for causing said output means to output said calculated R&D cost ratio to display means, printing means, recording medium, or another telecommunications device via a communication line.

14. An enterprise evaluation program to be executed by information processing means of an enterprise evaluation device comprising: management-finance information acquisition means for acquiring management-finance information of an enterprise from a management-finance database; R&D cost ratio calculation means for calculating R&D cost ratio; display data generation means for generating display data; output means for outputting the display data to display means or the like; and information processing means capable of controlling said management-finance information acquisition means, R&D cost ratio calculation means, display data generation means and output means,
wherein said information processing means realizes:

a function for causing said management-finance information acquisition means to acquire R&D cost in a first specified period and sales volume, value added amount, gross operating profit or total assets in a second specified period of a specified enterprise from the management-finance database containing management-finance information of enterprises;
a function for causing said R&D cost ratio calculation means to calculate index of R&D cost ratio $\alpha$ obtained by dividing said acquired R&D cost by the sales volume, index of R&D cost ratio $\beta$ obtained by dividing said acquired R&D cost by the value added amount, index of R&D cost ratio $\gamma$ by dividing said acquired R&D cost by the gross operating profit, or index of R&D cost ratio $\delta$ obtained by dividing said acquired R&D cost by the total assets for a plurality of enterprises;
a function for causing said display data generation means to generate display data for displaying, index by index and enterprise by enterprise, the calculated index of R&D cost ratio of said plurality of enterprises; and
a function for causing said output means to output said display data to display means, printing means, recording medium, or another telecommunications device via a communication line.

15. An enterprise evaluation program to be executed by information processing means of an enterprise evaluation device comprising: management-finance information acquisition means for acquiring management-finance information of an enterprise from a management-finance database; R&D cost ratio calculation means for calculating R&D cost ratio; display data generation means for generating display data; output means for outputting the display data to display means or the like; and information processing means capable of controlling said management-finance information acquisition means, R&D cost ratio calculation means, display data generation means and output means,
wherein said information processing means realizes:

a function for causing said management-finance information acquisition means to acquire R&D cost in a first specified period and value added amount and market value added in a second specified period of a specified enterprise from the management-finance database containing management-finance information of enterprises;
a function for causing said R&D cost ratio calculation means to calculate the R&D cost ratio by dividing said acquired R&D cost by the value added amount;
a function for causing said display data generation means to generate display data for associating and displaying said calculated R&D cost ratio and said acquired market value added; and

a function for causing said output means to output said display data to display means, printing means, recording medium, or another telecommunications device via a communication line.

**16.** An enterprise evaluation program to be executed by information processing means of an enterprise evaluation device comprising: management-finance information acquisition means for acquiring management-finance information of an enterprise from a management-finance database; R&D cost ratio calculation means for calculating R&D cost ratio; display data generation means for generating display data; output means for outputting the display data to display means or the like; and information processing means capable of controlling said management-finance information acquisition means, R&D cost ratio calculation means, display data generation means and output means, wherein said information processing means realizes:

a function for causing said management-finance information acquisition means to acquire R&D cost in a first specified period and gross operating profit and market value added in a second specified period of a specified enterprise from the management-finance database containing management-finance information of enterprises; a function for causing said R&D cost ratio calculation means to calculate the R&D cost ratio by dividing said acquired R&D cost by the gross operating profit; a function for causing said display data generation means to generate display data for associating and displaying said calculated R&D cost ratio and said acquired market value added; and a function for causing said output means to output said display data to display means, printing means, recording medium, or another telecommunications device via a communication line.

**17.** An enterprise evaluation program to be executed by information processing means of an enterprise evaluation device comprising: management-finance information acquisition means for acquiring management-finance information of an enterprise from a management-finance database; expected intellectual property profit calculation means for calculating expected intellectual property profit; output means for outputting the expected intellectual property profit to display means or the like; and information processing means capable of controlling said management-finance information acquisition means, expected intellectual property profit calculation means and output means, wherein said information processing means realizes:

a function for causing said management-finance information acquisition means to acquire expected enterprise value profit, financial assets, return on financial assets, tangible fixed assets and return on tangible fixed assets of a specified enterprise from the management-finance database containing management-finance information of enterprises; a function for causing said expected intellectual property profit calculation means to calculate the expected intellectual property profit by subtracting, from the expected enterprise value profit, a value obtained by adding a value obtained by multiplying said acquired financial assets with the return on financial assets and a value obtained by multiplying the tangible fixed assets with the return on tangible assets; and a function for causing said output means to output said calculated expected intellectual property profit to display means, printing means, recording medium, or another telecommunications device via a communication line.

**18.** An enterprise evaluation program to be executed by information processing means of an enterprise evaluation device comprising: management-finance information acquisition means for acquiring management-finance information of an enterprise from a management-finance database; expected intellectual property profit calculation means for calculating expected intellectual property profit; output means for outputting the expected intellectual property profit to display means or the like; and information processing means capable of controlling said management-finance information acquisition means, expected intellectual property profit calculation means and output means, wherein said information processing means realizes:

a function for causing said management-finance information acquisition means to acquire fixed liabilities, return on fixed liabilities, total market value, return on total market value, financial assets, return on financial assets, tangible fixed assets and return on tangible fixed assets of a specified enterprise from the management-finance database containing management-finance information of enterprises; a function for causing said expected intellectual property profit calculation means to calculate the expected intellectual property profit by subtracting a value, obtained by multiplying the financial assets with the return on financial assets and a value obtained by multiplying the tangible fixed assets with the return on tangible assets, from a value obtained by adding a value obtained by multiplying said acquired fixed liabilities with the return on fixed liabilities and a value obtained by multiplying the total market value with the return on total market value; and a function for causing said output means to output said calculated expected intellectual property profit to display

## EP 1 688 873 A1

means, printing means, recording medium, or another telecommunications device via a communication line.

**Amended claims under Art. 19.1 PCT**

**5.** amended) An enterprise evaluation device, comprising:

management-finance information acquisition means for acquiring R&D cost in a first specified period and sales volume, value added amount, gross operating profit or total assets in a second specified period of a specified enterprise from a management-finance database containing management-finance information of enterprises; R&D cost ratio calculation means for calculating index of R&D cost ratio $\beta$ obtained by dividing said acquired R&D cost by the value added amount, index of R&D cost ratio $\gamma$ by dividing said acquired R&D cost by the gross operating profit, or index of R&D cost ratio $\delta$ obtained by dividing said acquired R&D cost by the total assets for a plurality of enterprises; display data generation means for generating display data for displaying, index by index and enterprise by enterprise, the calculated index of R&D cost ratio of said plurality of enterprises; and output means for outputting said display data to display means, printing means, recording medium, or another telecommunications device via a communication line.

**14.** amended) An enterprise evaluation program to be executed by information processing means of an enterprise evaluation device comprising: management-finance information acquisition means for acquiring management-finance information of an enterprise from a management-finance database; R&D cost ratio calculation means for calculating R&D cost ratio; display data generation means for generating display data; output means for outputting the display data to display means or the like; and information processing means capable of controlling said management-finance information acquisition means, R&D cost ratio calculation means, display data generation means and output means,
wherein said information processing means realizes:

a function for causing said management-finance information acquisition means to acquire R&D cost in a first specified period and sales volume, value added amount, gross operating profit or total assets in a second specified period of a specified enterprise from the management-finance database containing management-finance information of enterprises;
a function for causing said R&D cost ratio calculation means to calculate index of R&D cost ratio $\beta$ obtained by dividing said acquired R&D cost by the value added amount, index of R&D cost ratio $\gamma$ by dividing said acquired R&D cost by the gross operating profit, or index of R&D cost ratio $\delta$ obtained by dividing said acquired R&D cost by the total assets for a plurality of enterprises;
a function for causing said display data generation means to generate display data for displaying, index by index and enterprise by enterprise, the calculated index of R&D cost ratio of said plurality of enterprises; and
a function for causing said output means to output said display data to display means, printing means, recording medium, or another telecommunications device via a communication line.

**19.** new) An enterprise evaluation device, comprising:

management-finance information acquisition means for acquiring R&D cost in a first specified period and sales volume, value added amount, gross operating profit or total assets in a second specified period of a specified enterprise from a management-finance database containing management-finance information of enterprises;
R&D cost ratio calculation means for calculating
index of R&D cost ratio $\alpha$ obtained by dividing said acquired R&D cost by the sales volume and
index of R&D cost ratio $\beta$ obtained by dividing said acquired R&D cost by the value added amount, index of R&D cost ratio $\gamma$ by dividing said acquired R&D cost by the gross operating profit, or index of R&D cost ratio $\delta$ obtained by dividing said acquired R&D cost by the total assets for a plurality of enterprises;
display data generation means for generating display data for displaying, index by index and enterprise by enterprise, the calculated plurality of indexes of R&D cost ratio including the R&D cost ratio $\alpha$ of said plurality of enterprises; and
output means for outputting said display data to display means, printing means, recording medium, or another telecommunications device via a communication line.

**20.** new) An enterprise evaluation program to be executed by information processing means of an enterprise evaluation device comprising: management-finance information acquisition means for acquiring management-finance information of an enterprise from a management-finance database; R&D cost ratio calculation means for calculating R&D cost ratio; display data generation means for generating display data; output means for outputting the display data to display means or the like; and information processing means capable of controlling said management-finance information acquisition means, R&D cost ratio calculation means, display data generation means and output means, wherein said information processing means realizes:

a function for causing said management-finance information acquisition means to acquire R&D cost in a first specified period and sales volume, value added amount, gross operating profit or total assets in a second specified period of a specified enterprise from the management-finance database containing management-finance information of enterprises;

a function for causing said R&D cost ratio calculation means to calculate

index of R&D cost ratio $\alpha$ obtained by dividing said acquired R&D cost by the sales volume and

index of R&D cost ratio $\beta$ obtained by dividing said acquired R&D cost by the value added amount, index of R&D cost ratio $\gamma$ by dividing said acquired R&D cost by the gross operating profit, or index of R&D cost ratio $\delta$ obtained by dividing said acquired R&D cost by the total assets for a plurality of enterprises;

a function for causing said display data generation means to generate display data for displaying, index by index and enterprise by enterprise, the calculated plurality of indexes of R&D cost ratio including the R&D cost ratio $\alpha$ of said plurality of enterprises; and

a function for causing said output means to output said display data to display means, printing means, recording medium, or another telecommunications device via a communication line.

**Statement under Art. 19.1 PCT**

This amendment deletes, in each of claims 5 and 14, "index of R&D cost ratio $\alpha$ obtained by dividing said acquired R&D cost by the sales volume" that was one of alternative elements in claims 5 and 14.

This amendment adds new claims 19 and 20 stating "index of R&D cost ratio $\alpha$ obtained by dividing said acquired R&D cost by the sales volume <u>and</u>" in stead of "index of R&D cost ratio $\alpha$ obtained by dividing said acquired R&D cost by the sales volume" in original claims 5 and 14, respectively.

The new claims 19 and 20 also states "the calculated <u>plurality of indexes</u> of R&D cost ratio <u>including the R&D cost ratio $\alpha$</u> of said plurality of enterprises" in stead of "the calculated index of R&D cost ratio of said plurality of enterprises" in original claims 5 and 14, respectively.

The amended claims 5 and 14 are novel since calculating and displaying only the index of R&D cost ratio obtained by dividing the R&D cost by the sales volume that was disclosed in Document 1 of the International Search Report are deleted.

The new claims 19 and 20 necessarily include calculating and displaying the index of R&D cost ratio $\alpha$ obtained by dividing the R&D cost by the sales volume so as to combine and display the R&D cost ratio $\alpha$ and other R&D cost ratios for comparison.

FIG. 1

DATABASE — 20

(a) MANAGEMENT-
    FINANCE INFORMATION
(b) PATENT INFORMATION
(c) MARKET VALUE
    INFORMATION
(d) TECHNICAL
    DOCUMENTS

COMMUNICATION
NETWORK — 10

30

FIG. 2

| | |
|---|---|
| 364 | PRINTER — 32 |

365 TRANSMISSION/RECEPTION MEANS
370 INPUT MEANS (LCD DISPLAY)
372 DISPLAY MEANS (CRT, etc)

30

371 INPUT I/F
373 DISPLAY I/F
374 PRINTER I/F

399

380 CPU (INFORMATION PROCESSING MEANS)
381 MEMORY
385 RECORDING MEANS I/F
379 RECORDING MEDIUM I/F
390 CALENDAR CLOCK

384 HDD (RECORDING MEANS)
378 RECORDING MEDIUM MOUNTING UNIT
RECORDING MEDIUM
377

FIG. 3

(a) MANAGEMENT-FINANCE INFORMATION

| (A) Information on Size of Company | (B) Financial Information of Company | | (C) Combined Information of Company |
|---|---|---|---|
| Number of employees | Sales volume | Total assets | Sales volume per employee |
| Number of officers | Sales profit | Tangible fixed assets | R&D cost per employee |
| Capital | Operating profit | Amount of capital investment | Sales profit per employee |
| Number of plants/offices | Gross operating profit | Depreciation costs | Operating profit per employee |
| Ground floor area | Sales profit ratio | Patent royalty income | Gross operating profit per employee |
| Total floor area | Operating profit ratio | Financial assets (liquid assets and liquid liabilities) | |
| Ownership ratio of premises | Gross operating profit ratio | Interests paid/discounts | |
| Ownership ratio of building | Total market value to total assets ratio | Long-term prime rate (long-term borrowing rate) | |
| Number of employees (consolidated basis) | Total market value to stockholders' equity ratio | Short-term prime rate | |
| Number of officers (consolidated basis) | Total market value to sales volume ratio | Interest on bonds | |
| Capital (consolidated basis) | Total market value to gross operating profit ratio | 10-year government bond yield ratio | |
| Number of plants/offices (consolidated basis) | Total market value to operating profit ratio | Personnel costs, (including officers' compensation and labor costs) | |
| Ground floor area (consolidated basis) | Gross operating profit to total assets ratio | Welfare expenses | |
| Total floor area (consolidated basis) | Gross operating profit to stockholders' equity ratio | Capital stock | |
| Ownership ratio of premises (consolidated basis) | Operating profit to total assets ratio | Total number of outstanding shares | |
| Ownership ratio of building (consolidated basis) | Operating profit to Stockholders' equity ratio | Stock price (Nikkei Stock Average) | |
| | Stockholders' equity ratio | Taxes and public charges | |
| | Balance of total market value and stockholders' equity | | |
| | R&D cost | | |
| | R&D cost to sales volume ratio | | |
| | R&D cost to operating profit ratio | | |
| | R&D cost to gross operating profit ratio | | |

FIG. 4A

(b) PATENT INFORMATION

| (A) Application Related Matters | |
|---|---|
| Filing date | Number of filings |
| Application number | Number of request for examination |
| Title of the invention | Number of filings based on IPC |
| Inventors | Number of filings based on keywords |
| Applicants | Number of claims filed |
| Scope of claims | Years spent on examination requests |
| Abstract | Number of inventors |
| IPC | Number of applicants (number of joint applications) |
| FI | Number of domestic priority-claiming applications |
| F term | Number of domestic priority bases claimed in applications |
| Agents | Number of priority bases from foreign countries |
| Publication date | Number of applications in which an exception to loss of novelty is requested |
| Publication number | Number of applications in which examination is requested before laid-open |
| Existence of request for examination | Number of divisional applications |
| Date of request for examination | Number of withdrawn/abandoned applications |
| Priority date | Number of converted applications |
| Priority number | Number of expedited examinations |
| Date of publication of translations of PCT international application | Number of filings (in each country) |
| Number for publication of translations of PCT international application | Number of inventors in applications (in each country) |
| Date of domestic re-publication of PCT international application | Number of applicants in applications (in each country) |
| Number for domestic re-publication of PCT international application | Number of priority-claiming applications (in each country) |
| International filing date | Number of priority bases claimed in applications (in each country) |
| International application number | Number of divisional applications (in each country) |
| International publication date | |
| International publication number | |
| Designated countries | |

FIG. 4B

(b) PATENT INFORMATION

| (B) Registration Related Matters | |
|---|---|
| Registration date | Number of registrations |
| Issue date of registration | Number of claims registered |
| Registration number | Number of expired patents after registration |
| Scheduled day of expiration of right | Years spent from application to registration |
| Date of publication of examined application | Patent registration rate |
| Publication number of examined application | Patent allowance rate |
| Annual maintenance fee payment status | Years spent from request for examination to registration |
| Number of final decisions for rejection | Number of applications in which preferential examination is conducted |
| Date of final decision for rejection | Number of rejections issued |
| Number of claims decided to be finally rejected | Number of amendments filed |
| Number of appeals against final decision for rejection | Number of amendments filed (for formalities) |
| number of abandoned/withdrawn applications after request for examination | Number of written oppositions filed |
| Number of abandoned/withdrawn claims after request for examination | Number of appeals and trials |
| Number of invalidation trials | Number of registrations for creating patent right |
| Appeal/trial number | Number of registrations for extending term of patent right |
| Date of decision to appeal/trial | Number of transferred patents |
| Number of claims demanded for invalidation trial | Number of registrations (in each country) |
| Number of appeals to dismissal of amendment or trials for correction | Years required for registration (in each country) |
| Number of oppositions | Years spent on examination (in each country) |
| Number of claims demanded for opposition | Number of rejections issued (in each country) |
| Inventors of registered patent | Number of amendments filed (in each country) |
| Number of inventors of registered patent | Number of amendments filed (for formalities) (in each country) |
| Applicants of registered patent | Number of oppositions filed (in each country) |
| References cited | Number of applications in which preferential examination is conducted |
| | Number of rejections issued |
| | |

"PATENT QUARTERLY JOURNAL" INDEX LIST OF ENTERPRISE VALUE EVALUATION SYSTEM

A: Business, Profit and Market Value Related Index (1)

| Index Group | Index | Formula |
|---|---|---|
| (A) Investment | Facility Investment Amount | [(Current Term Tangible Fixed Assets - Previous Term Tangible Fixed Assets)] + (Current Term Depreciation Cost) |
| | R&D Cost | Total Amount of R&D Cost |
| | Investment Trend Index | Term-on-Term Ratio of [(Facility Investment Amount) + (R&D Cost)] |
| (B) Management/Finance Analysis | Facility Investment Efficiency | (Value Added Amount)/(Tangible Fixed Assets) |
| | Labor Productivity | (Value Added Amount)/(Number of Employees) |
| | Labor Equipment Ratio | (Tangible Fixed Assets)/(Number of Employees) |
| | Labor Distribution Share | [(Personnel Expense to be Included in Selling Cost and Administrative Expenses) + (Labor Cost to be Included in Manufacturing Cost)]/(Value Added Amount) |
| | Total Factor Productivity | (Value Added Amount Rate of Change) - [(1 - Labor Distribution Share (To Value Added)) × (Depreciation Target Tangible Fixed Assets Rate of Change)] - [(Labor Distribution Share (To Value Added)) × (Number of Employees Rate of Change)] |
| | Cost-to-Sales Ratio | (Cost of Sales)/(Sales Volume) |
| | Cost of Sales-and-Administration Ratio to Sales | (Selling Cost and Administrative Expenses)/(Sales Volume) |
| | Interest Bearing Debt Ratio | (Interest Bearing Debt)/(Total Assets) |
| | Equity to Asset Ratio | (Equity Capital)/(Total Assets) |
| (C) Profit Related Items | Sales Volume | (Sales Volume) |
| | Value Added Amount | (Operating Net Profit) + (Interest Paid and Discount) + (R&D Cost) + (Depreciation Cost) + (Personnel Expense (including board members' remuneration)) + (Welfare Expense) + (Tax and Dues) (Operating Net Profit) = (Operating Profit) - (Interest Paid and Discount) |
| | Gross Operating Profit (GBP) | (Operating Profit) + (R&D Cost) |
| | Earnings Before Interest, Taxes, Depreciation and Amortization (EBITDA) | (Operating Profit) + (Depreciation Cost) |
| | Operating Profit | (Operating Profit) |
| | Operating Net Profit | (Operating Profit) - (Interest Paid and Discount) |
| | Patent Royalty Income | (Patent Royalty Income (Including Royalty Income of Trademarks and Brands, etc.)) |
| | ROA α | [(Value Added Amount) + (Patent Royalty Income)]/(Total Assets) |
| | ROA β | [(GBP) + (Patent Royalty Income)]/(Total Assets) |
| | ROA γ | [(EBITDA) + (Patent Royalty Income)]/(Total Assets) |
| | ROA δ | [(Operating Profit) + (Patent Royalty Income)]/(Total Assets) |
| | Earnings on Intellectual Assets (EOIA) | [(GBP) + (Patent Royalty Income)] - [(Financial Assets) × (Profit Ratio m)] + [(Tangible Fixed Assets) × (Profit Ratio f)] (Profit Ratio m): Application of Short Term Prime Rate; (Profit Ratio f): Application of Long Term Prime Rate |
| | Return On Intellectual Assets (ROIA) | (Earnings on Intellectual Assets)/(Total Assets) |

FIG. 5

EP 1 688 873 A1

FIG. 6

EP 1 688 873 A1

"PATENT QUARTERLY JOURNAL" INDEX LIST OF ENTERPRISE VALUE EVALUATION SYSTEM

A: Business, Profit and Market Value Related Index (2)

| Index Group | Index | Formula |
|---|---|---|
| (D) Excess Profit Analysis | Excess Value Added Amount | Sales Volume × {(Sales Volume Value Added Ratio) - (Industry Average Sales Volume Value Added Ratio)} |
| | Excess GBP | Sales Volume × {(Sales Volume GBP Ratio) - (Industry Average Sales Volume GBP Ratio)} |
| | Excess EBITDA | Sales Volume × {(Sales Volume EBITDA Ratio) - (Industry Average Sales Volume EBITDA Ratio)} |
| | Excess Operating Profit | Sales Volume × {(Operating Profit Ratio (To Sales)) - (Industry Average Operating Profit Ratio (To Sales))} |
| | Excess ROA $\alpha$ | (ROA $\alpha$) - (Industry Average ROA $\alpha$) |
| | Excess ROA $\beta$ | (ROA $\beta$) - (Industry Average ROA $\beta$) |
| | Excess ROA $\gamma$ | (ROA $\gamma$) - (Industry Average ROA $\gamma$) |
| | Excess ROA $\delta$ | (ROA $\delta$) - (Industry Average ROA $\delta$) |
| | Excess Earnings on Intellectual Assets (EXEOIA) | (Net Assets) × {(Ratio of Earnings on Intellectual Assets) - (Industry Average of Ratio of Earnings on Intellectual Assets) |
| (M) Market Evaluation Related Items | MVA | (Value of Stock) - (Shareholders' Equity)    (Value of Stock) = (Total Number of Outstanding Stock) × (Stock Price) |
| | PBR | (Value of Stock)/(Equity Capital) |
| | Expected Intellectual Property Profit | {(Fixed Liabilities) × (Profit Ratio a) + (Value of Stock) × (Profit Ratio p)] - {(Financial Assets) × (Profit Ratio m) + (Tangible Fixed Assets) × (Profit Ratio f)}} (Profit Ratio a): (Weighted Average of Long Term Prime Rate and Bond Rate) × (1 - Corporate Tax) (Profit Ratio p): Calculated Based on Capital Asset Pricing Model (CAPM). Yield on Long Term 10-Year Government Bonds, Stock Investment Profit Ratio, $\beta$ Value were used; (Profit Ratio m): Application of Short Term Prime Rate (Profit Ratio f): Application of Long Term Prime Rate |
| (PE) Patent Profitability Related Items | Patent Profitability $\alpha$ | {(GBP) + (Patent Royalty Income)}/(Total Number of Effective Patents) |
| | Patent Profitability $\beta$ | {(Excess Value Added) + (Patent Royalty Income)}/(Total Number of Effective Patents) |
| | Patent Profitability $\gamma$ | {(Excess GBP) + (Patent Royalty Income)}/(Total Number of Effective Patents) |
| | Patent Profitability $\delta$ | (Excess Earnings on Intellectual Assets (EXEOIA))/(Total Number of Effective Patents) |

FIG. 7

EP 1 688 873 A1

"PATENT QUARTERLY JOURNAL" INDEX LIST OF ENTERPRISE VALUE EVALUATION SYSTEM

B: R&D and Patent Related Index (1)

| Index Group | Index | Formula |
|---|---|---|
| (R) R&D Related Items | R&D Cost Ratio $\alpha$ | (R&D Cost)/(Sales Volume) |
| | R&D Cost Ratio $\beta$ | (R&D Cost)/(Value Added Amount) |
| | R&D Cost Ratio $\gamma$ | (R&D Cost)/(GBP) |
| | R&D Cost Ratio $\delta$ | (R&D Cost)/(Total Assets) |
| | Number of Inventors | (Calculated Based on "Inventor" Column of Laid-Open Publications) |
| | Ratio of Inventors | (Number of Inventors)/(Number of Employees) |
| | R&D Cost per Inventor | (R&D Cost)/(Number of Inventors) |
| (PA) Patent Application Related Items | Number of Patent Applications | (Joint Application is Recorded as One Application) |
| | Number of Claims Filed | (Sum of Number of Claims of Laid-Open Publications) |
| | Number of Claims per Patent Application | (Number of Claims Filed)/(Number of Patent Applications) |
| | Number of application per Inventor | (Number of Patent Applications (Other Than Joint Applications))/(Number of Inventors) |
| | Number of Claims per Inventor (Patent Application) | (Number of Claims Filed (Other Than Joint Applications))/(Number of Inventors) |
| | Number of Joint Applications | (Number of Joint Applications Among Patent Applications Filed) |
| | Joint Filing Ratio | (Number of Joint Applications)/(Number of Patent Applications) |
| | Number of Applicants in Joint | (Number of Joint Applicants in Joint Applications) |
| | Patent Application Stock | (Cumulative Number of Patent Applications) |
| (PB) Examination Request Related Items | Number of Examination Requests | (Number of Examination Requests Filed) |
| | Years to Examination Request (Average) | [ $\Sigma$ (Date of Examination Request - Filing Date)] / [(Number of Examination Requests)×(Annual Number of Days)] |
| | Examination Request Ratio | (Examination Request Ratio Pertaining to Number of Patent Applications of Each Year) |
| | Cumulative Number of Examination Requests | (Cumulative Number of Examination Requests) |

FIG. 8

EP 1 688 873 A1

"PATENT QUARTERLY JOURNAL" INDEX LIST OF ENTERPRISE VALUE EVALUATION SYSTEM

B: R&D and Patent Related Index (2)

| Index Group | Index | Formula |
|---|---|---|
| (PT) Patent Acquisition (Registration) Related Items | Number of Patents Granted | (Number of Patents Granted) |
| | Number of Claims Registered | (Number of "Claims" in Registered Gazette) |
| | Years to Patent Granted (Average) | { Σ (Patent Registration Date - Patent Filing Date)}/{(Number of Patents Granted)×(Annual Number of Days)} |
| | Patent Granted Ratio to Number of Applications | (Number of Patents Granted Each Year)/(Number of Patent Applications Filed Each Year) |
| | Patent Granted Stock | (Patent Granted Stock at End of Each Year) |
| | Patent Granted Ratio to Number of Examination Requests | (Number of Patents Granted Each Year)/(Number of Examination Requests Filed Each Year) |
| | Patent Granted Stock Ratio to Examination Request Stock | (Patent Granted Stock)/(Cumulative Number of Examination Requests) |
| | Number of Effective Patents Granted | (Number of Patents Granted Each Year) - (Number of Patents Invalidated Among Patent Registrations Each Year) |
| (PP) Patent Productivity | Patent Application Productivity | (Number of Claims of Patent Applications in a year)/(R&D Cost in a previous year) |
| | Examination Request Productivity | Correction of (Patent Application Productivity). (Patent Application Productivity) × (Estimated Examination Request Ratio) (Estimated Examination Request Ratio: Sought Based on Number of Examination Requests for Previous Applications in which the term for Examination Request is expired.) |
| | Patent Granted Productivity | Correction of (Patent Application Productivity). (Patent Application Productivity) × (Estimated Registration Ratio) (Estimated Registration Ratio: Sought Based on Number of Registrations of Previous Applications, Lapsed Years, Average Required Years to Patent Granted) |
| (PS) Patent Stock Related Items | Total Number of Effective Patents | (Patent Granted Stock) - (Patent Invalidation Stock) |
| | Patent Granted Renewal Ratio | (Total Number of Effective Patents)/(Patent Granted Stock) |
| | Years to Renewal Patent Granted Expiration (Average) | { Σ (Scheduled Invalidation Date of Each Patent of the Total Number of Effective Patents - Year End)} /{(Total Number of Effective Patents) × (Annual Number of Days)} |
| | Patent Stock Index | (Total Number of Effective Patents) × (Years to Renewal Patent Granted Expiration (Average)) |
| | Total Patent Assets | {(R&D Cost)/(Number of Patents Granted)} ×(Total Number of Effective Patents) |

FIG. 9

EP 1 688 873 A1

"PATENT QUARTERLY JOURNAL" INDEX LIST OF ENTERPRISE VALUE EVALUATION SYSTEM

C: Patent Portfolio Related Index

| Index Group | Index | Formula |
|---|---|---|
| (PAP) Patent Application Portfolio analysis | Patent Application Portfolio analysis | (Power of Number of Claims Share Per Technical Field)    (Share: Share of Each Technical Field in an Enterprise or Share of each Enterprise in All Enterprises in a Technical Field) |
| | Patent Diversification Index (PDI) | $[1 - \Sigma(\text{Share of Each Technical Field in an Enterprise})^2]$ |
| | Patent Competitive Position Index (PCPI) | $\Sigma[[\Sigma \text{ (SEI Index Per Technical Field)}] \times(\text{Share of Each Company Per Technical Field})] \times (1 + \text{Excess Growth Rate})$ |
| | Average Patent Competitive Position Index (Average PCPI) | (Patent Competitive Position Index (PCPI))/(Number of Technical Fields covered by Company's Patent Applications (Average in 3 Years)) |
| (PKA) Characteristic Keywords | Characteristic Keywords | (Selected Keywords Having an Appearance Frequency That is Not Large in All Patent Publications and That is Large in Patent Publications of the Same Company) |
| | Number of Characteristic Keywords | (Representation of Character of an Enterprise by the Number of Keywords under a Constant Condition of Selecting the Characteristic Keywords) |
| (PSI) Patent Similarity Analysis | Patent Similarity Index | (Ratio of Patent Publications Having the Keyword of the Subject Patent Publication within a Population) |
| | Patent Similarity Index to the Same Company (PSIself) | (Patent Similarity Index (PSI) When the Population is the Same Company's Patent Publications) |
| | Patent Similarity Index to All Companies (PSIall) | (Patent Similarity Index (PSI) When the Population is All Patent Publications Including the Other Companies' Patent Publications) |
| | Normal Patent Publication | (Patent Publications Having Significantly Large PSIall) |
| | Exceptional Patent Publication | (Patent Publications Having Significantly Small PSIall) |

FIG. 10

EP 1 688 873 A1

## R&D COST RATIO
## (CHEMICAL)

R&D COST RATIO γ
R&D COST RATIO β
R&D COST RATIO α
R&D COST RATIO δ

ENTERPRISE

| ⊡ R&D COST RATIO δ | ◪ R&D COST RATIO α |
| ■ R&D COST RATIO β | ☐ R&D COST RATIO γ |

FIG. 11

EP 1 688 873 A1

MVA – R&D COST RATIO $\beta$
(CHEMICAL)
$y = -14366x + 485499$

MVA (MILLION YEN) vs R&D COST RATIO $\beta$

42

FIG. 12

EP 1 688 873 A1

MVA – R&D COST RATIO $\gamma$
(CHEMICAL)

$y = -11376x + 760065$

FIG. 13

TRANSITION OF
EXPECTED INTELLECTUAL PROPERTY PROFIT (EIPP)
(CHEMICAL)

FIG. 14

TRANSITION OF
EXPECTED INTELLECTUAL PROPERTY PROFIT (EIPP)
(ELECTRICAL EQUIPMENT)

FIG. 15

```
                    ┌─────────────────────┐
                    │        START        │
                    └─────────────────────┘
                               │
                               ▼        ╭─ S501
                    ┌─────────────────────┐
                    │  SELECT ENTERPRISE FOR │
                    │ ENTERPRISE VALUE EVALUATION │
                    └─────────────────────┘
                               │
                               ▼        ╭─ S502
                    ┌─────────────────────┐
                    │ SELECT MENU FOR ENTERPRISE │
                    │    VALUE EVALUATION │
                    └─────────────────────┘
                               │
                               ▼        ╭─ S503
              ◇──────────────────────────────◇
              ◇       SELECT COMBINATION      ◇
              ◇──────────────────────────────◇
         │                                         │
         ▼           ╭─ S604                       ▼        ╭─ S504
┌──────────────────────┐            ┌──────────────────────┐
│ ACQUIRE MANAGEMENT-  │            │ ACQUIRE PATENT       │
│ FINANCE INFORMATION  │            │ INFORMATION          │
└──────────────────────┘            └──────────────────────┘
         │           ╭─ S605               │        ╭─ S505
         ▼                                 ▼
┌──────────────────────┐            ┌──────────────────────┐
│ CALCULATE MANAGEMENT-│            │ CALCULATE PATENT     │
│ FINANCE INFORMATION  │            │ INFORMATION          │
└──────────────────────┘            └──────────────────────┘
         │           ╭─ S606               │        ╭─ S506
         ▼                                 ▼
┌──────────────────────┐            ┌──────────────────────┐
│ ORGANIZE CALCULATION │            │ ORGANIZE CALCULATION │
│ RESULT OF MANAGEMENT-│            │ RESULT OF PATENT     │
│ FINANCE INFORMATION  │            │ INFORMATION          │
└──────────────────────┘            └──────────────────────┘
         │                                 │
         └────────────────┬────────────────┘
                          ▼        ╭─ S507
              ┌─────────────────────┐
              │     CREATE GRAPH    │
              └─────────────────────┘
                          │
                          ▼        ╭─ S508
              ┌─────────────────────┐
              │     OUTPUT GRAPH    │
              └─────────────────────┘
                          │
                          ▼        ╭─ S509
              ┌─────────────────────┐
              │ DETERMINE ENTERPRISE VALUE │
              └─────────────────────┘
                          │
                          ▼
              ┌─────────────────────┐
              │         END         │
              └─────────────────────┘
```

FIG. 16

EP 1 688 873 A1

ENTERPRISE VALUE EVALUATION MENU (1)

SELECT INDEXES IN THE WINDOWS BELLOW

BACK
SET

BUSINESS, PROFIT AND MARKET VALUE

R&D AND PATENT

PATENT PORTFOLIO

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ■ | (PAP) Patent application portfolio analysis | ☐ |
| (B) Management-finance analysis index | ☐ | (PA) Patent application related index | ☐ | (PKA) Characteristic keyword list | ☐ |
| (C) Profit related index | ☐ | (PB) Examination request related index | ☐ | (PSI) Patent similarity analysis | ☐ |
| (D) Excess profit analysis index | ☐ | (PT) Patent acquisition (registration) related index | ☐ | | |
| (M) Market evaluation related index | ☐ | (PP) Patent productivity index | ☐ | | |
| (PE) Patent profitability index | ☐ | (PS) Patent stock related index | ☐ | | |

FIG. 17

ENTERPRISE VALUE EVALUATION MENU (3)

BACK
SET

SELECT INDEXES IN THE WINDOWS BELLOW

BUSINESS, PROFIT AND MARKET VALUE

- ☐ (A) Investment index
- ☐ (B) Management-finance analysis index
- ☐ (C) Profit related index
- ☐ (D) Excess profit analysis index
- ☐ (M) Market evaluation related index
- ☐ (PE) Patent profitability index

R&D AND PATENT

| (R) Research and development related index | ☐ R&D cost ratio $\alpha$ |
| (PA) Patent application related index | ☐ R&D cost ratio $\beta$ |
| (PB) Examination request related index | ■ R&D cost ratio $\gamma$ |
| (PT) Patent acquisition (registration) related index | ☐ R&D cost ratio $\delta$ |
| (PP) Patent productivity index | ☐ Number of inventors |
| (PS) Patent stock related index | ☐ Inventor ratio |
| | ☐ R&D cost per inventor |

PATENT PORTFOLIO

- ☐ (PAP) Patent application portfolio analysis
- ☐ (PKA) Characteristic keyword list
- ☐ (PSI) Patent similarity analysis

FIG. 18

EP 1 688 873 A1

ENTERPRISE VALUE EVALUATION MENU (1)

SELECT INDEXES IN THE WINDOWS BELLOW

| BACK |
| SET |

**BUSINESS, PROFIT AND MARKET VALUE**

| (A) Investment index | ☐ |
| (B) Management-finance analysis index | ☐ |
| (C) Profit related index | ☐ |
| (D) Excess profit analysis index | ☐ |
| (M) Market evaluation related index | ■ |
| (PE) Patent profitability index | ☐ |

**R&D AND PATENT**

| (R) Research and development related index | ☐ |
| (PA) Patent application related index | ☐ |
| (PB) Examination request related index | ☐ |
| (PT) Patent acquisition (registration) related index | ☐ |
| (PP) Patent productivity index | ☐ |
| (PS) Patent stock related index | ☐ |

**PATENT PORTFOLIO**

| (PAP) Patent application portfolio analysis | ☐ |
| (PKA) Characteristic keyword list | ☐ |
| (PSI) Patent similarity analysis | ☐ |

FIG. 19

EP 1 688 873 A1

ENTERPRISE VALUE EVALUATION MENU (2)

BACK
SET

SELECT INDEXES IN THE WINDOWS BELLOW

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management-finance analysis index | ☐ | (PA) Patent application related index | ☐ | (PKA) Characteristic keyword list | ☐ |
| (C) Profit related index | ☐ | (PB) Examination request related index | ☐ | (PSI) Patent similarity analysis | ☐ |
| (D) Excess profit analysis index | ☐ | (PT) Patent acquisition (registration) related index | ☐ | | |
| (M) Market evaluation related index | ■ MVA | (PP) Patent productivity index | ☐ | | |
| (PE) Patent profitability index | ☐ PBR | (PS) Patent stock related index | ☐ | | |
| | ☐ Expected intellectual property profit | | | | |

FIG. 20

ENTERPRISE VALUE EVALUATION
INPUT CONDITION SETTING (2)

SELECT CONDITIONS IN THE WINDOWS BELLOW

BACK
SET

TARGET (1)

| All industries | | |
|---|---|---|
| Industry | Food | ☐ |
| Enterprise | Ceramic | ☐ |
| Other unit | Steel, nonferrous and metal | ☐ |
| | Machinery and shipbuilding | ☐ |
| | Electrical equipment | ■ |
| | Automobile & transport machine | ☐ |
| | Fabric, pulp and paper | ☐ |
| | Precision equipment | ☐ |
| | Other manufacturing | ☐ |
| | Construction | ☐ |
| | Information & telecommunication | ☐ |
| | Electricity and gas | ☐ |
| | Chemical | ☐ |
| | Service | ☐ |
| | Pharmaceutical | ☐ |

TARGET (2)

| Industry | ☐ |
|---|---|
| Enterprise | ☐ |
| Enterprise | |
| Other unit | |

Company name

Company code

Applicant code

Search

FIG. 21

ENTERPRISE VALUE EVALUATION
OUTPUT CONDITION SETTING

SELECT CONDITIONS IN THE WINDOWS BELLOW

BACK
SET

MAP POSITION

| 1 map | ■ |
|---|---|
| 2 maps | ☐ |
| 1 data sheet | ☐ |
| 2 data sheets | ☐ |
| 1 map with data | ☐ |
| 2 maps with data | ☐ |
| 1 map with comment | ☐ |
| 2 maps with comment | ☐ |
| 1 map with data and comment | ☐ |
| 2 maps with data and comment | ☐ |

OUTPUT DATA

| R&D cost ratio $\alpha$ | none | ☐ |
|---|---|---|
| R&D cost ratio $\beta$ | top 5 | ☐ |
| R&D cost ratio $\gamma$ | top 10 | ☐ |
| R&D cost ratio $\delta$ | top 15 | ☐ |
| COMMENT | top 20 | ■ |
| (free entry) | numerical input | ☐ |

# INTERNATIONAL SEARCH REPORT

| | International application No. |
|---|---|
| | PCT/JP2004/003354 |

| A. CLASSIFICATION OF SUBJECT MATTER |
|---|
| Int.Cl⁷ G06F17/60 |

According to International Patent Classification (IPC) or to both national classification and IPC

| B. FIELDS SEARCHED |
|---|
| Minimum documentation searched (classification system followed by classification symbols)<br> Int.Cl⁷ G06F17/60 |

Documentation searched other than minimum documentation to the extent that such documents are included in the fields searched

| Jitsuyo Shinan Koho | 1922–1996 | Toroku Jitsuyo Shinan Koho | 1994–2004 |
|---|---|---|---|
| Kokai Jitsuyo Shinan Koho | 1971–2004 | Jitsuyo Shinan Toroku Koho | 1996–2004 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | Hideki HANAEDA, "Keiei Zaimu to Joho", Japan, Kabushiki Kaisha Chuo Keizaisha, 25 July, 1989 (25.07.89), first eddition, 37 to 57 | 5,14 |
| A | JP 2003-331102 A (Mizuho Corporate Bank, Ltd.), 21 November, 2003 (21.11.03), Abstract (Family: none) | 1-18 |
| A | JP 2003-233703 A (Hitachi, Ltd.), 22 August, 2003 (22.08.03), Abstract & EP 128813 A1 & US 2003/46203 A1 | 1-18 |

☐ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 27 April, 2004 (27.04.04) | 18 May, 2004 (18.05.04) |

| Name and mailing address of the ISA/ Japanese Patent Office | Authorized officer |
|---|---|
| Facsimile No. | Telephone No. |

Form PCT/ISA/210 (second sheet) (January 2004)